(19) **Europäisches Patentamt European Patent Office Office européen des brevets**

(11) **EP 4 195 846 B1**

(12) **EUROPEAN PATENT SPECIFICATION**

(45) Date of publication and mention of the grant of the patent:
**17.09.2025 Bulletin 2025/38**

(21) Application number: **21853622.5**

(22) Date of filing: **20.07.2021**

(51) International Patent Classification (IPC):
$H04W\ 72/12^{(2023.01)}$    $H04L\ 5/00^{(2006.01)}$
$H04W\ 52/32^{(2009.01)}$    $H04W\ 52/24^{(2009.01)}$
$H04W\ 52/14^{(2009.01)}$    $H04W\ 52/42^{(2009.01)}$
$H04L\ 1/18^{(2023.01)}$    $H04B\ 7/06^{(2006.01)}$
$H04L\ 1/08^{(2006.01)}$    $H04B\ 7/022^{(2017.01)}$
$H04L\ 1/1607^{(2023.01)}$    $H04L\ 1/1829^{(2023.01)}$
$H04L\ 1/1867^{(2023.01)}$    $H04W\ 52/08^{(2009.01)}$
$H04W\ 72/21^{(2023.01)}$

(52) Cooperative Patent Classification (CPC):
**H04W 52/242; H04L 1/08; H04L 1/1854; H04L 1/1861; H04L 1/1896; H04L 5/0053; H04L 5/0094; H04W 52/08; H04W 52/325; H04W 72/21;** H04B 7/022; H04B 7/06956; H04L 1/1664; H04L 5/0023; H04L 5/0055;    (Cont.)

(86) International application number:
**PCT/KR2021/009336**

(87) International publication number:
**WO 2022/030819 (10.02.2022 Gazette 2022/06)**

(54) **METHOD AND DEVICE FOR TRANSMITTING AND RECEIVING UPLINK IN WIRELESS COMMUNICATION SYSTEM**

VERFAHREN UND VORRICHTUNG ZUM SENDEN UND EMPFANGEN VON UPLINK IN EINEM DRAHTLOSKOMMUNIKATIONSSYSTEM

PROCÉDÉ ET DISPOSITIF DE TRANSMISSION ET DE RÉCEPTION DE LIAISON MONTANTE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2020 KR 20200099453**
           **14.10.2020 KR 20200132991**

(43) Date of publication of application:
**14.06.2023 Bulletin 2023/24**

(73) Proprietor: **LG Electronics Inc.**
**Yeongdeungpo-Gu**
**Seoul**
**07336 (KR)**

(72) Inventors:
• **GO, Seongwon**
  **Seoul 06772 (KR)**
• **KIM, Hyungtae**
  **Seoul 06772 (KR)**
• **KANG, Jiwon**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(56) References cited:
**WO-A1-2019/201247**     **WO-A1-2020/026425**
**WO-A1-2020/030038**     **WO-A1-2020/092260**
**CN-A- 110 536 394**     **CN-A- 110 536 399**

- **LENOVO ET AL: "Remaining issues on multi-TRP/panel transmission", vol. RAN WG1, no. e-Meeting; 20200525 - 20200605, 15 May 2020 (2020-05-15), XP051885590, Retrieved from the Internet <URL:https://ftp.3gpp.org/tsg_ran/ WG1_RL1/TSGR1_101-e/Docs/R1-2003819.zip R1-2003819 Remaining issues on multi-TRP transmission.docx> [retrieved on 20200515]**
- **CONVIDA WIRELESS: "Enhancements on Multi-TRP for PUCCH and PUSCH", vol. RAN WG1, no. e-Meeting; 20210510 - 20210527, 12 May 2021 (2021-05-12), XP052011546, Retrieved from the Internet <URL:https://ftp.3gpp.org/tsg_ran/ WG1_RL1/TSGR1_105-e/Docs/R1-2105589.zip R1-2105589.docx> [retrieved on 20210512]**
- **LENOVO, MOTOROLA MOBILITY: "Remaining issues on multi-TRP/panel transmission", 3GPP DRAFT; R1-2003819, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200525 - 20200605, 15 May 2020 (2020-05-15), Mobile Competence Centre ; 650, route des Lucioles ; F-06921 Sophia-Antipolis Cedex ; France , XP051885590**

(52) Cooperative Patent Classification (CPC): (Cont.)
H04W 72/23

**Description**

[Technical Field]

The present disclosure relates to a wireless communication system, and in more detail, relates to a method and an apparatus for uplink transmission and reception in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

Prior art is found in CN 110 536 394 A which generally relates to a power control method, device and system, in CN 110 536 399 A which generally relates to a power control method, device and system, and in Lenovo et al, "Remaining issues on multi-TRP/panel transmission", R1-2003819.

[Disclosure]

[Technical Problem]

A technical object of the present disclosure is to provide a method and an apparatus of transmitting and receiving an uplink channel and/or signal.

In addition, an additional technical object of the present disclosure is to provide a method and an apparatus of transmitting and receiving uplink channels and/or signals for multiple transmission and reception points (TRPs) in a wireless communication system supporting multiple TRPs.

In addition, an additional technical object of the present disclosure is to provide a method and an apparatus of controlling transmission power when transmitting and receiving uplink channels and/or signals for multiple transmission and reception points (TRPs) in a wireless communication system supporting multiple TRPs.

The technical objects to be achieved by the present disclosure are not limited to the above-described technical objects, and other technical objects which are not described herein will be clearly understood by those skilled in the pertinent art from the following description.

[Technical Solution]

The invention is set out in the independent claims. Preferred embodiments of the invention are set out in the dependent claims.

According to a first aspect, we describe a method performed by a terminal in a wireless communication system, the method performed by a terminal comprising: receiving, from a base station, configuration information related to physical uplink control channel, PUCCH, transmission, wherein the configuration information includes information on two power control parameter sets; and transmitting, to the base station, the PUCCH transmission in one PUCCH resource based on the configuration information, wherein based on the one PUCCH resource being used for repetition of the PUCCH transmission, the two power control parameter sets are used alternately to each repetition of the PUCCH transmission or alternately to two repetitions of the PUCCH transmission to determine transmission power of the PUCCH transmission, and wherein whether the two PC parameter sets are used alternately to each repetition of the PUCCH transmission or alternately to two repetitions of the PUCCH transmission is determined based on the configuration information.

According to a second aspect, we describe a terminal operating in a wireless communication system, the terminal comprising: at least one transceiver for transmitting and receiving a wireless signal; and at least one processor for controlling the at least one transceiver, wherein the at least one processor configured to: receive, from a base station, configuration information related to physical uplink control channel, PUCCH, transmission, wherein the configuration information includes information on two power control parameter sets; and transmit, to the base station, the PUCCH transmission in one PUCCH resource based on the configuration information, wherein based on the one PUCCH resource being used for repetition of the PUCCH transmission, the two power control parameter sets are used alternately to each repetition of the PUCCH transmission or alternately to two repetitions of the PUCCH transmission to determine transmission power of the PUCCH transmission, and wherein whether the two PC parameter sets are used alternately to each repetition of the PUCCH transmission or alternately to two repetitions of the PUCCH transmission is determined based on the configuration information.

According to a third aspect, we describe a base station operating in a wireless communication system, the base station comprising: at least one transceiver for transmitting and receiving a wireless signal; and at least one processor for controlling the at least one transceiver, wherein the at least one processor configured to: transmit, to a terminal, configuration information related to physical uplink control channel, PUCCH, transmission, wherein the configuration information includes information on two power control parameter sets; and receive, from the terminal, the PUCCH transmission in one PUCCH resource based on the configuration information, wherein based on the one PUCCH resource being used for repetition of the PUCCH transmission, the two power control parameter sets are used alternately to each repetition of the PUCCH transmission or alternately to two repetitions of the PUCCH transmission to determine transmission power of the PUCCH transmission, and wherein whether the two PC parameter sets are used alternately to each repetition of the PUCCH transmission or alternately to two repetitions of the PUCCH transmission is determined based on the configuration information.

[Advantageous Effects]

According to an embodiment of the present disclosure, transmission of uplink channels and/or signals for multiple transmission and reception points (TRPs) may be supported in a wireless communication system supporting multiple TRPs.

In addition, according to an embodiment of the present disclosure, when transmitting uplink channels and/or signals for multiple transmission and reception points (TRPs) in a wireless communication system supporting multiple TRPs, transmit power of uplink channels and/or signals may be individually (independently) determined.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram illustrating a multi-panel terminal in a wireless communication system to which the present disclosure may be applied.

FIG. 8 illustrates a method of multiple TRPs transmission in a wireless communication system to which the present disclosure may be applied.

FIG. 9 and FIG. 10 illustrate a signaling procedure between a network and a terminal according to an embodiment of the present disclosure.

FIG. 11 illustrates an operation of a terminal for transmitting and receiving a PUCCH according to an embodiment of the present disclosure.

FIG. 12 illustrates an operation of a base station for transmitting and receiving a PUCCH according to an embodiment of the present disclosure.

FIG. 13 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU (road side unit), a robot, an AI (Artificial Intelligence) module, a drone (UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211 (physical channels and modulation), TS 36.212(multiplexing and channel coding), TS 36.213(physical layer procedures), TS 36.300(overall description), TS 36.331(radio resource control) may be referred to.

For 3GPP NR, TS 38.211 (physical channels and modulation), TS 38.212(multiplexing and channel coding), TS 38.213(physical layer procedures for control), TS 38.214 (physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

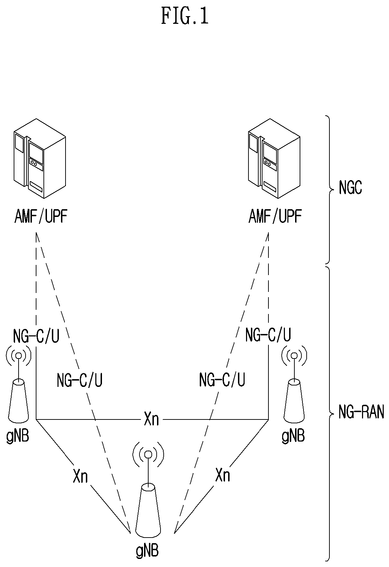

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

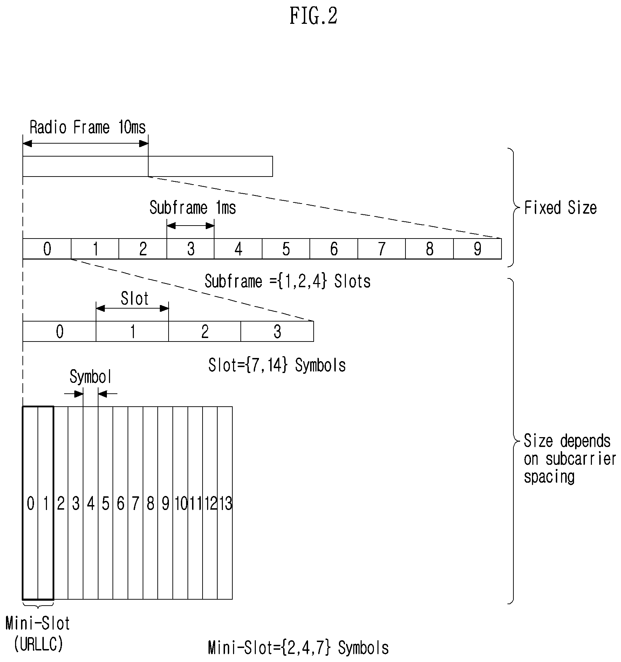

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f / 100) \cdot T_c = 10ms$. Here, a radio frame is configured with 10 subframes having a duration of $T_{sr} = (\Delta f_{max} N_f / 1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^\mu \in \{0, \dots, N_{slot}^{subframe,\mu}-1\}$ in a subframe and are numbered in an increasing order of $n_{s,f}^\mu \in \{0,\dots, N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

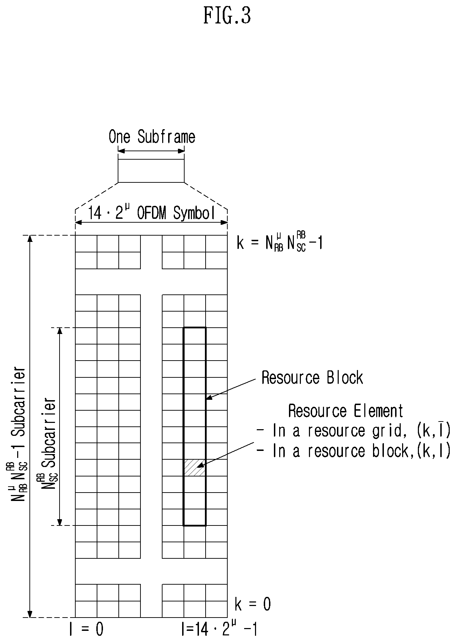

FIG. 3 illustrates a resource grid in a wireless communication system to which the present disclosure may be applied.

In reference to FIG. 3, it is illustratively described that a resource grid is configured with $N_{RB}^\mu N_{sc}^{RB}$ subcarriers in a frequency domain and one subframe is configured with $14\cdot2^\mu$ OFDM symbols, but it is not limited thereto. In an NR system, a transmitted signal is described by OFDM symbols of $2^\mu N_{symb}^{(\mu)}$ and one or more resource grids configured with $N_{RB}^\mu N_{sc}^{RB}$ subcarriers. Here, $N_{RB}^\mu \le N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0, \dots, N_{RB}^\mu N_{sc}^{RB}-1$ is an index in a frequency domain and $l'=0, \dots, 2^\mu N_{symb}^{(\mu)}-1$ refers to a position of a symbol in a subframe. When referring to a resource element in a slot, an index pair (k,l) is used. Here, $l=0, \dots, N_{symb}^\mu-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}{}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}{}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}{}^{start,\mu}$ is a common resource block that a BWP starts relatively to common resource block 0.

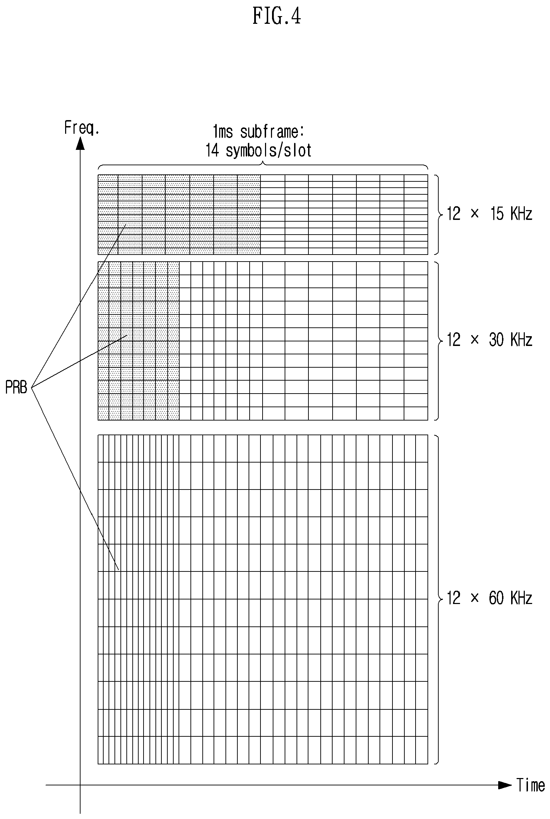

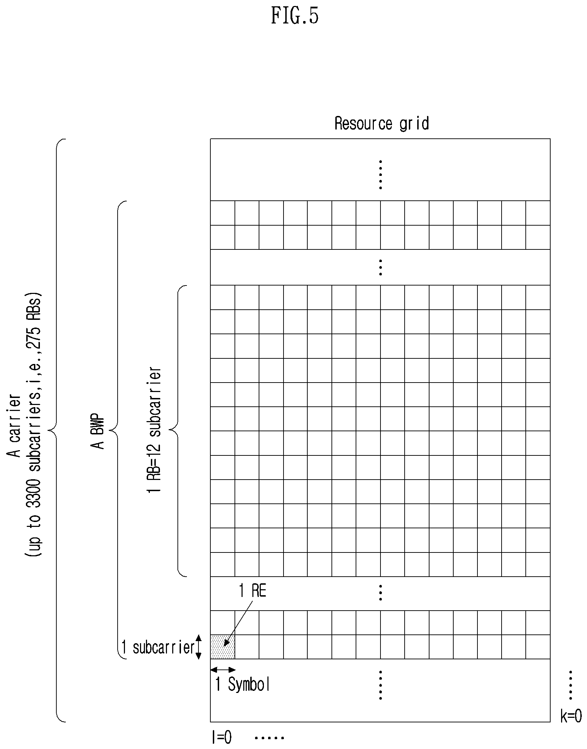

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be

**EP 4 195 846 B1**

received when a terminal performs an initial access procedure or before a RRC connection is set up, so a DL/UL BWP which is assumed by a terminal under these situations is defined as an initial active DL/UL BWP.

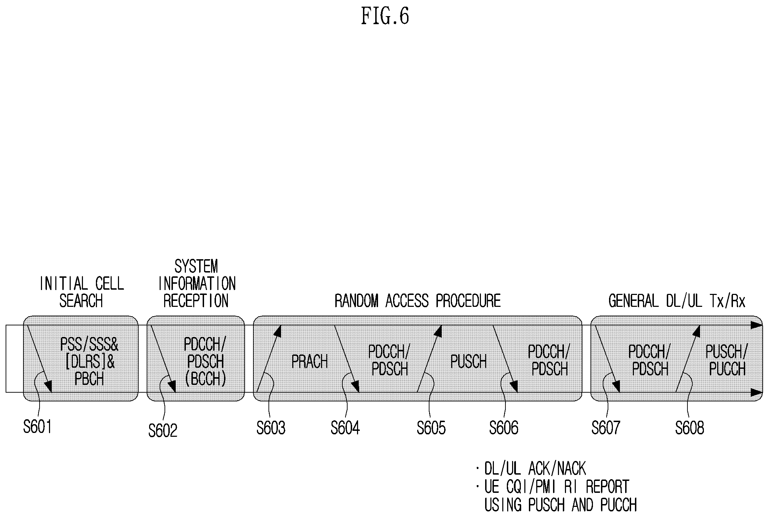

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block) -PRB(physical resource block) mapping, etc.), information related to a transport block (TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Uplink Power Control

It may be necessary to increase or decrease transmission power of a terminal (e.g., user equipment (UE) and/or a mobile device) according to a situation in a wireless communication system. As such, controlling transmission power of a terminal and/or a mobile device may be referred to as uplink power control. In an example, a method of controlling transmission power may be applied to satisfy requirements of a base station (e.g., gNB, eNB, etc.) (e.g., a SNR (Signal-to-Noise Ratio), a BER (Bit Error Ratio), a BLER (Block Error Ratio), etc.).

Power control as described above may be performed by an open-loop power control method and a closed-loop power control method.

Specifically, an open-loop power control method means a method of controlling transmission power without a feedback from a transmission device (e.g., a base station, etc.) to a reception device (e.g., a terminal, etc.) and/or a feedback from a reception device to a transmission device. In an example, a terminal may receive a specific channel/signal (a pilot channel/signal) from a base station and estimate strength of reception power by using it. Subsequently, a terminal may control transmission power by using strength of an estimated reception power.

Unlike it, a closed-loop power control method means a method of controlling transmission power based on a feedback from a transmission device to a reception device and/or a feedback from a reception device to a transmission device. In an example, a base station receives a specific channel/signal from a terminal and determines the optimum power level of a terminal based on a power level measured by a received specific channel/signal, SNR, BER, BLER, etc. A base station delivers information on a determined optimum power level (i.e., a feedback) to a terminal through a control channel, etc. and a corresponding terminal may control transmission power by using a feedback provided by a base station.

Hereinafter, a power control method for cases in which a terminal and/or a mobile device performs uplink transmission to a base station in a wireless communication system will be described specifically.

Specifically, hereinafter, power control methods for 1) uplink data channel (e.g., a PUSCH (Physical Uplink Shared Channel)), 2) uplink control channel (e.g., a PUCCH (Physical Uplink Control Channel)), 3) sounding reference signal (SRS), 4) random access channel (e.g., a PRACH (Physical Random Access Channel)) transmission are described. Here, a transmission occasion for a PUSCH, a PUCCH, an SRS and/or a PRACH (i.e., a transmission time unit) (i) may be defined by a slot index ($n\_s$) in a frame of a system frame number (SFN), a first symbol (S) in a slot, the number (L) of consecutive symbols, etc.

Hereinafter, for convenience of a description, a power control method is described based on a case in which a terminal performs PUSCH transmission. Of course, a corresponding method may be extended and applied to other uplink data channel supported in a wireless communication system.

For PUSCH transmission in an active UL bandwidth part (UL BWP) of a carrier (f) of a serving cell (c), a terminal may calculate a linear power value of transmission power determined by the following Equation 3. Subsequently, a corresponding terminal may control transmission power by considering the number of antenna ports and/or the number of SRS ports, etc. for a calculated linear power value.

Specifically, when a terminal performs PUSCH transmission in an active UL BWP (b) of a carrier (f) of a serving cell (c) by using a parameter set configuration based on index j and a PUSCH power control adjustment state based on index l, a terminal may determine PUSCH transmission power $P_{PUSCH,b,f,c}(i,j,q_d,l)$ (dBm) at a PUSCH transmission occasion (i) based on the following Equation 3.

【Equation 3】

$$P_{\text{PUSCH},b,f,c}(i,j,q_d,l) = \min\begin{cases} P_{\text{CMAX},f,c}(i), \\ P_{\text{O\_PUSCH},b,f,c}(j) + 10\log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{cases}$$

In Equation 3, index j represents an index for an open-loop power control parameter (e.g., $P_O$, alpha($\alpha$), etc.) and up to 32 parameter sets may be configured per cell. Index q_d represents an index of a DL RS resource for pathloss (PL) measurement (e.g., $PL_{b,f,c}(q_d)$) and up to 4 measured values may be configured per cell. Index l represents an index for a closed-loop power control process and up to 2 processes may be configured per cell.

Specifically, as $P_O$ (e.g., $P_{\text{O\_PUSCH},b,fc}(j)$) is a parameter which is broadcast as part of system information, it may represent target reception power from reception. A corresponding Po value may be configured by considering throughput of a terminal, capacity of a cell, noise and/or interference, etc. In addition, alpha (e.g., $\alpha_{b,f,c}(j)$) may represent a ratio which performs compensation for pathloss. Alpha may be configured as a value from 0 to 1 and according to a configured value, full pathloss compensation or fractional pathloss compensation may be performed. In this case, the alpha value may be configured by considering interference and/or a data rate, etc. between terminals. In addition, $P_{\text{CMAX},f,c}(i)$ may represent configured UE transmit power. In an example, the configured UE transmit power may be interpreted as 'configured maximum UE output power' defined in 3GPP TS 38.101-1 and/or TS38.101-2. In addition, $M_{\text{RB},b,f,c}^{\text{PUSCH}}(i)$ may represent bandwidth of PUSCH resource allocation expressed as the number of resource blocks (RB) for a PUSCH transmission occasion based on a subcarrier spacing ($\mu$). In addition, $f_{b,f,c}(i,l)$ related to a PUSCH power control adjustment state may be configured or indicated based on a TPC command field of DCI (e.g., DCI format 0_0, DCI format 0_1, DCI format 2_2, DCI format 2_3, etc.).

In this case, a specific RRC (Radio Resource Control) parameter (e.g., SRI-PUSCHPowerControl-Mapping, etc.) may represent a linkage between an SRI (SRS Resource Indicator) field of DCI (downlink control information) and the above-described index j, q_d, l. In other words, the above-described index j, l, q_d, etc. may be associated with a beam, a panel and/or a spatial domain transmission filter, etc. based on specific information. Thereby, PUSCH transmission power control in a unit of a beam, a panel and/or a spatial domain transmission filter may be performed.

Parameters and/or information for the above-described PUSCH power control may be configured individually (i.e., independently) per BWP. In this case, corresponding parameters and/or information may be configured or indicated by higher layer signaling (e.g., RRC signaling, a MAC-CE (Medium Access Control-Control Element), etc.) and/or DCI, etc. In an example, a parameter and/or information for PUSCH power control may be transmitted through RRC signaling PUSCH-ConfigCommon, PUSCH-PowerControl, etc. and PUSCH-ConfigCommon, PUSCH-PowerControl may be configured as in the following table 6.

【Table 6】

```
PUSCH-ConfigCommon ::=                   SEQUENCE {
    groupHoppingEnabledTransformPrecoding   ENUMERATED {enabled}
    pusch-TimeDomainAllocationList          PUSCH-TimeDomainResourceAllocationList
    msg3-DeltaPreamble                      INTEGER (-1..6)
    p0-NominalWithGrant                     INTEGER (-202..24)
    ...
}


PUSCH-PowerControl ::=                   SEQUENCE {
    tpc-Accumulation                        ENUMERATED { disabled }
    msg3-Alpha                              Alpha
    p0-NominalWithoutGrant                  INTEGER (-202..24)
    p0-AlphaSets                            SEQUENCE (SIZE (1..maxNrofP0-PUSCH-AlphaSets)) OF
P0-PUSCH-AlphaSet
    pathlossReferenceRSToAddModList         SEQUENCE (SIZE (1..maxNrofPUSCH-
PathlossReferenceRSs)) OF PUSCH-PathlossReferenceRS
    pathlossReferenceRSToReleaseList        SEQUENCE (SIZE (1..maxNrofPUSCH-
PathlossReferenceRSs)) OF PUSCH-PathlossReferenceRS-Id
    twoPUSCH-PC-AdjustmentStates            ENUMERATED {twoStates}
    deltaMCS                                ENUMERATED {enabled}
```

```
    sri-PUSCH-MappingToAddModList           SEQUENCE (SIZE (1..maxNrofSRI-PUSCH-Mappings)) OF
SRI-PUSCH-PowerControl
    sri-PUSCH-MappingToReleaseList          SEQUENCE (SIZE (1..maxNrofSRI-PUSCH-Mappings)) OF
SRI-PUSCH-PowerControlId
}
```

Through a method as described above, a terminal may determine or calculate PUSCH transmission power and transmit a PUSCH by using determined or calculated PUSCH transmission power.

Hereinafter, for convenience of a description, a power control method is described based on a case in which a terminal performs PUCCH transmission. Of course, a corresponding method may be extended and applied to other uplink control channel supported in a wireless communication system.

Specifically, when a terminal performs PUCCH transmission in an active UL BWP (b) of a carrier (f) of a primary cell (or a secondary cell) (c) by using a PUCCH power control adjustment state based on index l, a terminal may determine PUCCH transmission power $P_{PUCCH,b,f,c}(i,q_u,q_d,l)$ (dBm) at a PUCCH transmission occasion(i) based on the following Equation 4.

【Equation 4】

$$P_{\text{PUCCH},\,b,f,c}(i,q_u,q_d,l) = \min \begin{Bmatrix} P_{\text{CMAX},f,c}(i), \\ P_{\text{O\_PUCCH},\,b,f,c}(q_u) + 10\log_{10}\left(2^{\mu} \cdot M_{\text{RB},b,f,c}^{\text{PUCCH}}(i)\right) + PL_{b,f,c}(q_d) + \Delta_{\text{F\_PUCCH}}\left(F\right) + \Delta_{\text{TF},b,f,c}(i) + g_{b,f,c}(i,l) \end{Bmatrix}$$

In Equation 4, q_d represents an index for an open-loop power control parameter (e.g., $P_O$, etc.) and up to 8 parameter values may be configured per cell. Index q_d represents an index of a DL RS resource for pathloss (PL) measurement (e.g., $PL_{b,f,c}(q_d)$) and up to 4 measured values may be configured per cell. Index l represents an index for a closed-loop power control process and up to 2 processes may be configured per cell.

Specifically, as $P_O$ (e.g., $P_{O\_PUCCH,b,f,c}(q_u)$) is a parameter which is broadcast as part of system information, it may represent target reception power from reception. A corresponding $P_O$ value may be configured by considering throughput of a terminal, capacity of a cell, noise and/or interference, etc. In addition, $P_{CMAX,f,c}(i)$ may represent configured UE transmit power. In an example, the configured UE transmit power may be interpreted as 'configured maximum UE output power' defined in 3GPP TS 38.101-1 and/or TS38.101-2. In addition, $M_{RB,b,f,c}^{PUCCH}(i)$ may represent bandwidth of PUCCH resource allocation expressed as the number of resource blocks (RB) for a PUCCH transmission occasion based on a subcarrier spacing ($\mu$). In addition, a delta function (e.g., $\Delta_{F\_PUCCH}(F)$, $\Delta_{TF,b,f,c}(i)$) may be configured by considering a PUCCH format (e.g., PUCCH formats 0, 1, 2, 3, 4, etc.). In addition, $g_{b,f,c}(i,l)$ related to a PUCCH power control adjustment state may be configured or indicated based on a TPC command field of DCI (e.g., DCI format 1_0, DCI format 1_1, DCI format 2_2, etc.) received or detected by a terminal.

In this case, a specific RRC parameter (e.g., PUCCH-SpatialRelationInfo, etc.) and/or a specific MAC-CE command (e.g., PUCCH spatial relation Activation/Deactivation, etc.) may be used to activate or deactivate a linkage between a PUCCH resource and the above-described index q_u, q_d, l. In an example, a PUCCH spatial relation Activation/Deactivation command in MAC-CE may activate or deactivate a linkage between a PUCCH resource and the above-described index q_u, q_d, l based on a RRC parameter, PUCCH-SpatialRelationInfo. In other words, the above-described index q_u, q_d, l, etc. may be associated with a beam, a panel and/or a spatial domain transmission filter, etc. based on specific information. Thereby, PUCCH transmission power control in a unit of a beam, a panel and/or a spatial domain transmission filter may be performed.

Parameters and/or information for the above-described PUCCH power control may be configured individually (i.e., independently) per BWP. In this case, corresponding parameters and/or information may be configured or indicated by higher layer signaling (e.g., RRC signaling, MAC-CE, etc.) and/or DCI, etc. In an example, a parameter and/or information for PUCCH power control may be transmitted through RRC signaling PUCCH-ConfigCommon, PUCCH-PowerControl, etc. and PUCCH-ConfigCommon, PUCCH-PowerControl may be configured as in the following table 7.

【Table 7】

```
PUCCH-ConfigCommon ::=               SEQUENCE {
    pucch-ResourceCommon                 INTEGER (0..15)
    pucch-GroupHopping                   ENUMERATED { neither, enable, disable },
    hoppingTd                            INTEGER (0..1023)
    p0-nominal                           INTEGER (-202..24)
    ...
}


PUCCH-PowerControl ::=               SEQUENCE {
    deltaF-PUCCH-f0                      INTEGER (-16..15)
    deltaF-PUCCH-f1                      INTEGER (-16..15)
    deltaF-PUCCH-f2                      INTEGER (-16..15)
    deltaF-PUCCH-f3                      INTEGER (-16..15)
    deltaF-PUCCH-f4                      INTEGER (-16..15)
```

```
    p0-Set                               SEQUENCE (SIZE (1..maxNrofPUCCH-P0-PerSet)) OF P0-
PUCCH
    pathlossReferenceRSs                 SEQUENCE (SIZE (1..maxNrofPUCCH-
PathlossReferenceRSs)) OF PUCCH-PathlossReferenceRS
    twoPUCCH-PC-AdjustmentStates         ENUMERATED {twoStates}
    ...
}

P0-PUCCH ::=                          SEQUENCE {
    p0-PUCCH-Id                            P0-PUCCH-Id,
    p0-PUCCH-Value                        INTEGER (-16..15)
}

P0-PUCCH-Id ::=                      INTEGER (1..8)

PUCCH-PathlossReferenceRS ::=            SEQUENCE {
    pucch-PathlossReferenceRS-Id            PUCCH-PathlossReferenceRS-Id,
    referenceSignal                        CHOICE {
        ssb-Index                              SSB-Index,
        csi-RS-Index                           NZP-CSI-RS-ResourceId
    }
}
```

Through a method as described above, a terminal may determine or calculate PUCCH transmission power and transmit a PUCCH by using determined or calculated PUCCH transmission power.

Regarding transmission of a sounding reference signal (SRS) in an activated UL BWP of a carrier f of a serving cell c, a terminal may calculate a linear power value of transmit power determined by Equation 5 below. Thereafter, a terminal may control transmit power by equally dividing the calculated linear power value for antenna port(s) configured for an SRS.

Specifically, when a terminal perform SRS transmission in an activated UL BWP b of a carrier f of a serving cell c by using an SRS power control adjustment state based on an index l, the terminal may determine the SRS transmission power $P_{SRS,b,f,c}(i,q_s,l)$ (dBm) at an SRS transmission occasion i based on Equation 5 below.

【Equation 5】

$$P_{\mathrm{SRS}b,f,c}(i,q_s,l) = \min \begin{cases} P_{\mathrm{CMAX},f,c}(i), \\ P_{\mathrm{O\_SRS}b,f,c}(q_s) + 10\log_{10}(2^{\mu} \cdot M_{\mathrm{SRS}b,f,c}(i)) + \alpha_{\mathrm{SRS},b,f,c}(q_s) \cdot PL_{b,f,c}(q_d) + h_{b,f,c}(i,l) \end{cases}$$

In Equation 5, q_s represents an index for an open-loop power control parameter (e.g., $P_O$, alpha ($\alpha$), a DL RS resources for path loss (PL) measurements (e.g., $PL_{b,f,c}(q_d)$), etc.), and may be configured for each SRS resource set. Index I represents an index for a closed loop power control process, and a corresponding index may be configured independently of or in association with a PUSCH. If SRS power control is not associated with a PUSCH, a maximum number of closed loop power control processes for an SRS may be one.

Specifically, $P_O$ (e.g., $P_{O\_SRS,b,f,c}(q_s)$) is a parameter which is broadcasted as part of system information and may indicate target received power at a receiving side. The corresponding $P_O$ value may be configured in consideration of terminal throughput, cell capacity, noise and/or interference. In addition, alpha (e.g., $\alpha_{SRS,b,f,c}(q_s)$) may indicate a ratio for performing compensation for path loss. Alpha may be configured to a value from 0 to 1, and full pathloss compensation or fractional pathloss compensation may be performed according to the configured value. In this case, the alpha value may be configured in consideration of interference between terminals and/or data rate. In addition, $P_{CMAX,f,c}(i)$ may indicate the configured terminal transmission power. As an example, the configured terminal transmit power may be interpreted as 'configured maximum UE output power' defined in 3GPP TS 38.101-1 and/or TS38.101-2. In addition, $M_{SRS,b,f,c}(i)$ may indicate a bandwidth of SRS resource allocation expressed as a number of resource blocks (RBs) for an SRS transmission occasion based on subcarrier spacing ($\mu$). In addition, $h_{b,f,c}(i,l)$ related to an SRS power control adjustment state may be configured or indicated based on a TPC command field of DCI (e.g. DCI format 2_3, etc.) received or detected by a terminal and/or RRC parameter (e.g., srs -PowerControlAdjustmentStates, etc.).

A resource for SRS transmission may be applied as a reference for a base station and/or a terminal to determine a beam, panel, and/or spatial domain transmission filter, considering this point, SRS transmit power control may be performed in units of beams, panels, and/or space domain transmit filters.

Parameters and/or information for the above-described SRS power control may be individually (i.e., independently) configured for each BWP. In this case, the corresponding parameters and/or information may be configured or indicated through higher layer signaling (e.g., RRC signaling, MAC-CE, etc.) and/or DCI. As an example, parameters and/or information for SRS power control may be transmitted through RRC signaling, such as SRS-Config, SRS-TPC-CommandConfig, etc., and SRS-Config and SRS-TPC-CommandConfig are configured as shown in Table 8 below.

【Table 8】

| SRS-Config ::= | SEQUENCE { |
|---|---|

```
     srs-ResourceSetToReleaseList              SEQUENCE (SIZE(1..maxNrofSRS-ResourceSets)) OF
SRS-ResourceSetId
     srs-ResourceSetToAddModList               SEQUENCE (SIZE(1..maxNrofSRS-ResourceSets)) OF
SRS-ResourceSet
     srs-ResourceToReleaseList                 SEQUENCE (SIZE(1..maxNrofSRS-Resources)) OF SRS-
ResourceId
     srs-ResourceToAddModList                  SEQUENCE (SIZE(1..maxNrofSRS-Resources)) OF SRS-
Resource
     tpc-Accumulation                          ENUMERATED {disabled}
     ...
  }

  SRS-ResourceSet ::=                          SEQUENCE {
     srs-ResourceSetId                         SRS-ResourceSetId,
     srs-ResourceIdList                        SEQUENCE (SIZE(1..maxNrofSRS-ResourcesPerSet))
OF SRS-ResourceId
     resourceType                              CHOICE {
        aperiodic                                 SEQUENCE {
           aperiodicSRS-ResourceTrigger              INTEGER (1..maxNrofSRS-TriggerStates-1),
           csi-RS                                    NZP-CSI-RS-ResourceId
           slotOffset                                INTEGER (1..32)
           ...,
           [[
           aperiodicSRS-ResourceTriggerList-v1530    SEQUENCE (SIZE(1..maxNrofSRS-
TriggerStates-2))
                                                         OF INTEGER (1..maxNrofSRS-
TriggerStates-1)
           ]]
        },
        semi-persistent                           SEQUENCE {
           associatedCSI-RS                          NZP-CSI-RS-ResourceId
           ...
        },
        periodic                                  SEQUENCE {
           associatedCSI-RS                          NZP-CSI-RS-ResourceId
           ...
        }
     },
     usage                    ENUMERATED {beamManagement, codebook, nonCodebook,
antennaSwitching},
     alpha                                     Alpha
     p0                                        INTEGER (-202..24)
     pathlossReferenceRS                       CHOICE {
        ssb-Index                                 SSB-Index,
        csi-RS-Index                              NZP-CSI-RS-ResourceId
     }
     srs-PowerControlAdjustmentStates          ENUMERATED { sameAsFci2, separateClosedLoop}
     ...
  }


  SRS-TPC-CommandConfig ::=                    SEQUENCE {
     startingBitOfFormat2-3                    INTEGER (1..31)
     fieldTypeFormat2-3                        INTEGER (0..1)
     ...,
     [[
     startingBitOfFormat2-3SUL-v1530   INTEGER (1..31)
     ]]
  }
```

Through the method described above, a terminal may determine or calculate SRS transmission power, and may transmit an SRS using the determined or calculated SRS transmission power.

When a terminal performs PRACH transmission in an activated UL BWP b of a carrier f of a serving cell c, the terminal may determine PRACH transmission power $P_{PRACH,b,f,c}$ (i) (dBm) at a PRACH transmission occasion i based on

Equation 6 below.

【Equation 6】

$$P_{\mathrm{PRACH}b,f,c}(i) = \min\left\{P_{\mathrm{CMAX}f,c}(i), P_{\mathrm{PRACHtarget},f,c} + PL_{b,f,c}\right\}$$

In Equation 6, $P_{\mathrm{CMAX,f,c}}(i)$ may represent the configured terminal transmit power. As an example, the configured UE transmit power may be interpreted as 'configured maximum UE output power' defined in 3GPP TS 38.101-1 and/or TS38.101-2. In addition, $P_{\mathrm{PRACH,target,f,c}}$ indicates PRACH target reception power provided through higher layer signaling (e.g., RRC signaling, MAC-CE, etc.) for an activated UL BWP. In addition, $PL_{b,f,c}$ represent path loss for an activated UL BWP and may be determined based on a DL RS associated with PRACH transmission in an activated DL BWP of a serving cell c. For example, a terminal may determine path loss associated with PRACH transmission based on a synchronization signal (SS)/physical broadcast channel (PBCH) block associated with PRACH transmission.

Parameters and/or information for PRACH power control described above may be individually (i.e., independently) set for each BWP. In this case, the corresponding parameters and/or information may be configured or indicated through higher layer signaling (e.g., RRC signaling, MAC-CE, etc.). As an example, parameters and/or information for PRACH power control may be transmitted through RRC signaling, such as RACH-ConfigGeneric, and RACH-ConfigGeneric may be configured as shown in Table 9 below.

【Table 9】

```
  RACH-ConfigGeneric ::=                SEQUENCE {
      prach-ConfigurationIndex             INTEGER (0..255),
      msg1-FDM                             ENUMERATED {one, two, four, eight},
      msg1-FrequencyStart                  INTEGER (0..maxNrofPhysicalResourceBlocks-1),
      zeroCorrelationZoneConfig            INTEGER(0..15),
      preambleReceivedTargetPower          INTEGER (-202..-60),
      preambleTransMax                     ENUMERATED {n3, n4, n5, n6, n7, n8, n10, n20, n50,
  n100, n200},
      powerRampingStep                     ENUMERATED {dB0, dB2, dB4, dB6},
      ra-ResponseWindow                    ENUMERATED {sl1, sl2, sl4, sl8, sl10, sl20, sl40,
  sl80},
      ...
  }
```

Through the method described above, a terminal may determine or calculate PRACH transmit power, and may transmit a PRACH using the determined or calculated PRACH transmit power.

Multi Panel Operations

'A panel' referred to in the present disclosure may be interpreted/applied as 'a plurality of (or at least one) panels' or 'a panel group' (having a similarity/a common value from a viewpoint of a specific characteristic (e.g., timing advance (TA), a power control parameter, etc.)). Alternatively, 'a panel' referred to in the present disclosure may be interpreted/applied as 'a plurality of (or at least one) antenna ports' or 'a plurality of (or at least one) uplink resources' or 'an antenna port group' or 'an uplink resource group (or set)' (having a similarity/a common value from a viewpoint of a specific characteristic (e.g., TA, a power control parameter, etc.)). Alternatively, 'a panel' referred to in the present disclosure may be interpreted/applied as 'a plurality of (or at least one) beams' or 'at least one beam group (or set)' (having a similarity/a common value from a viewpoint of a specific characteristic (e.g., TA, a power control parameter, etc.)). Alternatively, 'a panel' referred to in the present disclosure may be defined as a unit for a terminal to configure a transmission/reception beam. For example, 'a transmission panel' may generate a plurality of candidate transmission beams in one panel, but it may be defined as a unit which may use only one beam of them in transmission at a specific time. In other words, only one transmission beam (spatial relation information RS) may be used per Tx panel to transmit a specific uplink signal/channel. In addition, 'a panel' in the present disclosure may refer to 'a plurality of (or at least one) antenna ports' or 'an antenna port group' or 'an uplink resource group (or set)' with common/similar uplink synchronization and may be interpreted/applied as an expression which is generalized as 'an uplink synchronization unit (USU)'. In addition, 'a panel' in the present disclosure may be interpreted/applied as an expression which is generalized as 'an uplink transmission entity (UTE)'.

In addition, the 'uplink resource (or resource group)' may be interpreted/applied as a PUSCH/PUCCH/SRS/PRACH resource (or resource group (or set)). In addition, the interpretation/application may be interpreted/applied conversely. In addition, 'an antenna (or an antenna port)' may represent a physical or logical antenna (or antenna port) in the present disclosure.

In other words, 'a panel' referred to in the present disclosure may be variously interpreted as 'a terminal antenna element group', 'a terminal antenna port group', 'a terminal logical antenna group', etc. In addition, for which physical/logical antennas or antenna ports will be combined and mapped to one panel, a variety of schemes may be considered by considering a position/a distance/a correlation between antennas, a RF configuration, and/or an antenna (port) virtualization scheme, etc. Such a mapping process may be changed according to terminal implementation. In addition, 'a panel' referred to in the present disclosure may be interpreted/applied as 'a plurality of panels' or 'a panel group' (having a similarity from a viewpoint of a specific characteristic).

Hereinafter, multi-panel structures will be described.

Terminal modeling which installs a plurality of panels (e.g., configured with one or a plurality of antennas) in terminal implementation in a high-frequency band (e.g., bidirectional two panels in 3GPP UE antenna modeling). A variety of forms may be considered in implementing a plurality of panels of such a terminal. Contents described below are described based on a terminal which supports a plurality of panels, but they may be extended and applied to a base station (e.g., a TRP) which supports a plurality of panels. The after-described contents related to multi-panel structures may be applied to transmission and reception of a signal and/or a channel considering multi panels described in the present disclosure.

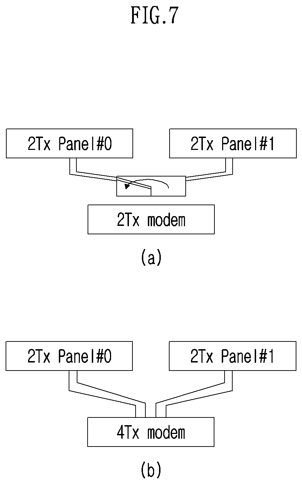

FIG. 7 is a diagram illustrating a multi-panel terminal in a wireless communication system to which the present disclosure may be applied.

FIG. 7(a) illustrates implementation of RF (radio frequency) switch-based multi panel terminals and FIG. 7(b) illustrates implementation of RF connection-based multi panel terminals.

For example, it may be implemented based on a RF switch as in FIG. 7(a). In this case, only one panel is activated for a moment and it may be impossible to transmit a signal for a certain duration of time to change an activated panel (i.e., panel switching).

For implementation of a plurality of panels in a different way, a RF chain may be connected respectively so that each panel can be activated anytime as in FIG. 7(b). In this case, time for panel switching may be 0 or too little. And, it may be possible to simultaneously transmit a signal by activating a plurality of panels at the same time (STxMP: simultaneous transmission across multi-panel) according to a model and power amplifier configuration.

For a terminal having a plurality of panels, a radio channel state may be different per panel, and in addition, a RF/antenna configuration may be different per panel, so a method in which a channel is estimated per panel is needed. In particular, a process in which one or a plurality of SRS resources are transmitted respectively per panel is needed to measure uplink quality or manage an uplink beam, or to measure downlink quality per panel or manage a downlink beam by utilizing channel reciprocity. Here, a plurality of SRS resources may be SRS resources which are transmitted by a different beam in one panel or may be SRS resources which are repeatedly transmitted by the same beam. Hereinafter, for convenience, a set of SRS resources transmitted in the same panel (a specific usage parameter (e.g., beam management, antenna switching, a codebook-based PUSCH, a non-codebook based PUSCH) and a specific time domain behavior (e.g., aperiodic, semi-persistent, or periodic)) may be referred to as an SRS resource group. For this SRS resource group, an SRS resource set configuration supported in a Rel-15 NR system may be utilized as it is or it may be configured separately by bundling one or a plurality of SRS resources (having the same time domain behavior and usage).

For reference, only when usage is beam management for the same usage and time domain behavior in Rel-15, a plurality of SRS resource sets may be configured. In addition, it is defined so that simultaneous transmission cannot be performed between SRS resources configured in the same SRS resource set, but simultaneous transmission can be performed between SRS resources belonging to a different SRS resource set. Accordingly, if panel implementation and simultaneous transmission of a plurality of panels as in FIG. 7(b) are considered, a corresponding concept (an SRS resource set) itself may be matched to an SRS resource group. But, an SRS resource group may be separately defined if even implementation (panel switching) as in FIG. 7(a) is considered. In an example, a configuration may be given by giving a specific ID to each SRS resource so that resources with the same ID belong to the same SRS resource group and resources with a different ID belong to a different resource group.

For example, it is assumed that 4 SRS resource sets configured for BM usage (RRC parameter usage is configured as 'BeamManagement') are configured to a UE. Hereinafter, for convenience, each is referred to as SRS resource set A, B, C, D. In addition, a situation is considered which applies implementation performing SRS transmission by corresponding each of the sets to one (Tx) panel because UE implements a total of 4 (Tx) Panels.

[Table 10]

| The maximum number of SRS resource sets across all time domain behaviors (periodic/semi-persistent/aperiodic) reported in 2-30 | Additional limit to the maximum number of the maximum SRS resource sets per supported time domain behavior (periodic/semi-persistent/aperiodic) |
|---|---|
| 1 | 1 |
| 2 | 1 |
| 3 | 1 |
| 4 | 2 |
| 5 | 2 |
| 6 | 2 |
| 7 | 4 |
| 8 | 4 |

In Rel-15 standards, such UE implementation is more clearly supported by the following agreement. In other words, for a UE which performs capability reporting for a value reported in feature group (FG) 2-30 as 7 or 8 in Table 10, a total of up to 4 SRS resource sets for BM (per supported time domain behavior) may be configured as in the right column of Table 10. As above, implementation which performs transmission by corresponding one UE panel to each set may be applied.

Here, when 4 panel UE corresponds each panel to one SRS resource set for BM and transmits it, the number itself of configurable SRS resources per each set is also supported by separate UE capability signaling. For example, it is assumed that 2 SRS resources are configured in the each set. It may correspond to 'the number of UL beams' which may be transmitted per panel. In other words, the UE may respectively correspond 2 UL beams to 2 configured SRS resources per each panel and transmit them when 4 panels are implemented. In this situation, according to Rel-15 standards, one of a codebook(CB)-based UL or non-codebook(NCB)-based UL mode may be configured for final UL PUSCH transmission scheduling. In any case, only one SRS resource set (having usage set as "CB-based UL" or "NCB-based UL") configuration, i.e., only one dedicated SRS resource set (for a PUSCH) configuration, is supported in Rel-15 standards.

Hereinafter, multi panel UE (MPUE) categories will be described.

Regarding the above-described multi panel operations, the following 3 MPUE categories may be considered. Specifically, 3 MPUE categories may be classified according to i) whether multiple panels may be activated and/or ii) transmission using multiple panels may be possible.

i) MPUE category 1: In a terminal that multiple panels are implemented, only one panel may be activated at a time. A delay for panel switching/activation may be configured as [X]ms. In an example, the delay may be configured to be longer than a delay for beam switching/activation and may be configured in a unit of a symbol or in a unit of a slot. MPUE category 1 may correspond to MPUE-assumption1 described in standardization-related documents (e.g., a 3gpp agreement, a technical report(TR) document and/or a technical specification(TS) document, etc.).

ii) MPUE category 2: In a terminal that multiple panels are implemented, multiple panels may be activated at a time. One or more panels may be used for transmission. In other words, simultaneous transmission using panels may be performed in a corresponding category. MPUE category 2 may correspond to MPUE-assumption2 described in standardization-related documents (e.g., a 3gpp agreement, a TR document and/or a TS document, etc.) .

iii) MPUE category 3: In a terminal that multiple panels are implemented, multiple panels may be activated at a time, but only one panel may be used for transmission. MPUE category 3 may correspond to MPUE-assumption3 described in standardization-related documents (e.g., a 3gpp agreement, a TR document and/or a TS document, etc.).

Regarding multi panel-based signal and/or channel transmission and reception suggested in the present disclosure, at least one of the above-described 3 MPUE categories may be supported. In an example, in Rel-16, MPUE category 3 of the following 3 MPUE categories may be (selectively) supported.

In addition, information on a MPUE category may be predefined in specifications (i.e., standards). Alternatively, information on a MPUE category may be configured semi-statically and/or may be indicated dynamically according to a system situation (i.e., a network aspect, a terminal aspect). In this case, a configuration/an indication, etc. related to multi panel-based signal and/or channel transmission and reception may be configured/indicated by considering a MPUE category.

Hereinafter, a configuration/an indication related to panel-specific transmission/reception will be described.

Regarding a multi panel-based operation, signal and/or channel transmission and reception may be performed in a panel-specific way. Here, being panel-specific may mean that signal and/or channel transmission and reception in a unit of a panel may be performed. Panel-specific transmission and reception may be referred to as panel-selective transmission and reception.

Regarding panel-specific transmission and reception in a multi panel-based operation suggested in the present disclosure, a method of using identification information (e.g., an identifier(ID), an indicator, etc.) for configuring and/or indicating a panel which will be used for transmission and reception among one or more panels may be considered.

In an example, an ID for a panel may be used for panel-selective transmission of a PUSCH, a PUCCH, an SRS, and/or a PRACH among activated multiple panels. The ID may be configured/defined based on at least any one of the following 4 methods (options (Alts) 1, 2, 3, 4).

i) Alt.1 : An ID for a panel may be an SRS resource set ID.

In an example, it may be desirable to correspond each UE Tx panel to an SRS resource set configured in terms of terminal implementation when considering a) an aspect that SRS resources of multiple SRS resource sets having the same time domain behavior are simultaneously transmitted in the same BWP, b) an aspect that a power control parameter is configured in a unit of an SRS resource set, c) an aspect that a terminal may report up to 4 SRS resource sets (they may correspond to up to 4 panels) according to a supported time domain behavior. In addition, an Alt.1 scheme has an advantage that an SRS resource set related to each panel may be used for 'codebook' and 'non-codebook'-based PUSCH transmission. In addition, for an Alt.1 scheme, multiple SRS resources belonging to multiple SRS resource sets may be selected by extending an SRI (SRS resource indicator) field of DCI. In addition, a mapping table of an SRI to SRS resource may need to be extended to include SRS resources in the whole SRS resource set.

ii) Alt.2 : An ID for a panel may be an ID which is (directly) associated with a reference RS resource and/or a reference RS resource set.

ii) Alt.3 : An ID for a panel may be an ID which is directly associated with a target RS resource (a reference RS resource) and/or a reference RS resource set.

An Alt.3 scheme has an advantage that configured SRS resource set(s) corresponding to one UE Tx panel may be controlled more easily and that the same panel identifier may be allocated to multiple SRS resource sets having a different time domain behavior.

iv) Alt.4 : An ID for a panel may be an ID which is additionally configured to spatial relation information (e.g., RRC_ SpatialRelationInfo).

An Alt.4 scheme may be a scheme which newly adds information for representing an ID for a panel. In this case, it has an advantage that configured SRS resource sets corresponding to one UE Tx panel may be controlled more easily and that the same panel identifier may be allocated to multiple SRS resource sets having a different time domain behavior.

In an example, a method of introducing an UL TCI similarly to the existing DL TCI (Transmission Configuration Indication) may be considered. Specifically, definition of a UL TCI state may include a list of reference RS resources (e.g., an SRS, a CSI-RS and/or an SSB). A current SRI field may be reused to select a UL TCI state from a configured set or a new DCI field of DCI format 0_1 (e.g., a UL-TCI field) may be defined for a corresponding purpose.

Information related to the above-described panel-specific transmission and reception (e.g., a panel ID, etc.) may be transmitted by higher layer signaling (e.g., a RRC message, MAC-CE, etc.) and/or lower layer signaling (e.g., layer1 (L1: Layer1) signaling, DCI, etc.). Corresponding information may be transmitted from a base station to a terminal or may be transmitted from a terminal to a base station according to a situation or if necessary.

In addition, corresponding information may be configured by a hierarchical method which configures a set for a candidate group and indicates specific information.

In addition, the above-described identification information related to a panel may be configured in a unit of a single panel or in a unit of multiple panels (e.g., a panel group, a panel set).

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission (JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

A UE may recognize PUSCH (or PUCCH) scheduled by DCI received in different control resource sets(CORESETs) (or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/-PUCCH)transmitted to different panels belonging to the same TRP.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, ControlResourceSet information element (IE), which is a higher layer parameter, is used to configure a time/frequency control resource set (CORESET). For example, the control resource set (CORESET) may be related to detection and reception of downlink control information. The ControlResourceSet IE may include a CORESET related ID (e.g., controlResourceSetID) / an index of a CORESET pool for a CORESET (e.g., CORESETPoolIndex) / a time/frequency resource configuration of a CORESET / TCI information related to a CORESET, etc. For example, an index of a CORESET pool (e.g., CORESETPoolIndex) may be configured to 0 or 1. In the above description, a CORESET group may correspond to a CORESET pool, and a CORESET group ID may correspond to a CORESET pool index (e.g., CORESETPoolIndex).

Hereinafter, a method for improving reliability in Multi-TRP will be described.

As a transmission and reception method for improving reliability using transmission in a plurality of TRPs, the following two methods may be considered.

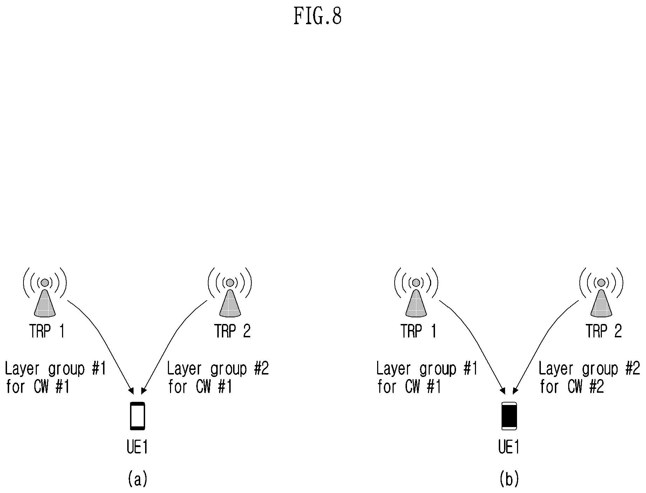

FIG. 8 illustrates a method of multiple TRPs transmission in a wireless communication system to which the present disclosure may be applied.

In reference to FIG. 8(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 8(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 8(b), it may have a disadvantage that a code rate corresponding to a TB is higher compared to FIG. 8(a). However, it has an advantage that it may adjust a code rate by indicating a different RV (redundancy version) value or may adjust a modulation order of each CW for encoded bits generated from the same TB according to a channel environment.

According to methods illustrated in FIG. 8(a) and FIG. 8(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

The Multi-TRP, scheduled by at least one DCI, may be performed as follows:

i) Method 1 (SDM): n (n is a natural number) TCI states in a single slot in overlapping time and frequency resource allocation

- Method 1a: Each transmission occasion is one layer or a set of layers of the same TB, and each layer or each set of layers is associated with one TCI and one set of DMRS port(s). A single codeword with one redundancy version (RV) is used for all layers or sets of layers. From a UE point of view, different coded bits are mapped to different layers or sets of layers with specific mapping rules.
- Method 1b: Each transmission occasion is one layer or a set of layers of the same TB, and each layer or each set of layers is associated with one TCI and one set of DMRS port(s). A single codeword with one RV is used for each spatial layer or a set of layers. RVs corresponding to each spatial layer or each set of layers may be the same or different.
- Method 1c: Each transmission occasion is one layer of the same TB with one DMRS port associated with multiple TCI state indexes, or one layer of the same TB with multiple DMRS ports associated with multiple TCI indexes one by one.

In methods 1a and 1c described above, the same MCS is applied to all layers or sets of layers.

ii) Method 2 (FDM): n (n is a natural number) TCI states in a single slot in non-overlapping frequency resource allocation. Each non-overlapping frequency resource allocation is associated with one TCI state. The same single/multiple DMRS port(s) are associated with all non-overlapping frequency resource allocations.

- Method 2a: A single codeword with one RV is used across an entire resource allocation. From a UE point of view, a common RB mapping (layer mapping of codewords) is applied across all resource allocations.
- Method 2b: A single codeword with one RV is used for each non-overlapping frequency resource allocation. RVs corresponding to each non-overlapping frequency resource allocation may be the same or different.

For method 2a, the same MCS is applied to all non-overlapping frequency resource allocations.

iii) Method 3 (TDM): n (n is a natural number) TCI states in a single slot in non-overlapping time resource allocation. Each transmission occasion of a TB has one TCI and one RV in a time granularity of a mini-slot. All transmission occasion(s) within a slot use a common MCS with the same single or multiple DMRS port(s). An RV/TCI state may be the same or different among transmission occasions.

iv) Method 4 (TDM): n (n is a natural number) TCI states in K (n<=K, where K is a natural number) different slots. Each transmission occasion of a TB has one TCI and one RV. All transmission occasion(s) across K slots use a common MCS with the same single or multiple DMRS port(s). An RV/TCI state may be the same or different among transmission occasions.

<u>Method for transmitting and receiving an uplink signal</u>

Hereinafter, in the methods proposed in the present disclosure, UL MTRP-URLLC means that multiple TRPs receive the same data/uplink control information (UCI) from one UE using different layer/time/frequency resources. For example, TRP 1 receives the same data/DCI from a UE in resource 1, TRP 2 receives the same data/DCI from the UE in resource 2, and then the received data/DCI is shared through a backhaul link connected between TRPs. A UE configured for the UL MTRP-URLLC transmission method transmits the same data/UCI using different layer/time/frequency resources. Here, a UE is indicated by a base station which Tx beam and which Tx power (i.e., UL TCI state) to use in layer/time/frequency resources in which the same data/UCI is transmitted. For example, when the same data/UCI is transmitted in resource 1 and resource 2, a UL TCI state used in resource 1 and a UL TCI state used in resource 2 are indicated. Such UL MTRP URLLC may be applied to a PUSCH/PUCCH.

In addition, in the methods proposed in the present disclosure, using (/mapping) a specific TCI state (or TCI) when receiving data/DCI/UCI for a certain frequency/time/space resource may mean, in the case of DL, that a channel from a DMRS using a QCL type and a QCL reference signal (RS) indicated by a corresponding TCI state in the frequency/time/spatial resource is estimated and data/DCI are received/demodulated using the estimated channel. In the case of UL, it may mean that a DMRS and data/UCI are transmitted/modulated using a Tx beam and/or Tx power indicated by the corresponding TCI state in the frequency/time/spatial resource.

The UL TCI state includes Tx beam or Tx power information of a UE, and may be configured to a UE through other parameters such as spatial relation info, etc. instead of the TCI state. The UL TCI state may be directly indicated in UL grant DCI, or may mean spatial relation info of an SRS resource indicated through an SRS resource indicator (SRI) field of UL grant DCI. Alternatively, it may mean an open loop (OL) transmission power control parameter (Tx power control parameter) (j: an index for OL (open loop) parameters Po and alpha (up to 32 parameter value sets per cell), $q\_d$: an index of a DL RS resource for pathloss (PL) measurement (up to 4 measurements per cell), l: a closed loop (CL) power control process index (up to 2 processes per cell)) associated with a value indicated through an SRI field of UL grant DCI.

On the other hand, MTRP-eMBB means that multiple TRPs transmit different data using different layers/times/-frequency, and a UE configured with the MTRP-eMBB transmission method assumes that various TCI states are indicated by DCI and data received using a QCL RS of each TCI state are different data.

In the present disclosure, for convenience of description, the proposed method is applied assuming cooperative transmission/reception between two TRPs, but it can be extended and applied in a multiple TRP environment of 3 or more, and can also be extended and applied in a multi-panel environment. Different TRPs can be perceived as different TCI states by a UE, so when a UE receives/transmits data/DCI/UCI using TCI state 1, it means that it receives/transmits data/DCI/UCI from/to TRP 1.

In addition, in the present disclosure, when a UE repeatedly transmits the same PUSCH so that a plurality of base stations (i.e., MTRP) receive it, it may mean that the same data is transmitted through a plurality of PUSCHs. Here, each PUSCH may be transmitted in an optimized manner for UL channels of different TRPs. Also, in the present disclosure below, when a UE divides and transmits the same PUSCH so that a plurality of base stations (ie, MTRP) receive it, it may mean that one data is transmitted through one PUSCH, but resources allocated to the PUSCH are divided and transmitted in an optimized manner for UL channels of different TRPs.

Similar to PUSCH transmission, a UE may repeatedly transmit the same PUCCH or divide and transmit the same PUCCH so that a plurality of base stations (i.e., MTRP) may receive the PUCCH.

For a plurality of transmission occasions (TOs) indicated to a UE to repeatedly transmit or dividedly transmit a PDCCH/PDSCH/PUSCH/PUCCH, UL transmission toward a specific TRP or DL reception from a specific TRP is performed at each TO. Here, a UL TO (or TO of TRP 1) transmitted toward TRP 1 means a TO using the first value among two spatial relations, two UL TCIs, two UL power control parameter sets, or two pathloss reference signals (PLRS) indicated to a UE. In addition, a UL TO (or TO of TRP 2) transmitted toward TRP 2 means a TO using the second value among two spatial relations, two UL TCIs, two UL power control parameter sets, or two pathloss reference signals (PLRS) indicated to a UE. Similar to this, even during DL transmission, a DL TO transmitted by TRP 1 (or TO of TRP 1) means a TO using the first value among two DL TCI states indicated to a UE (e.g., when two TCI states are configured in a CORESET). In addition, a DL TO transmitted by TRP 2 (or TO of TRP 2) means a TO using the second value among two DL TCI states indicated to a UE (e.g., when two TCI states are configured in a CORESET).

The proposal of the present disclosure may be extended and applied to various channels such as PUSCH/-PUCCH/PDSCH/PDCCH.

The proposal of the present disclosure can be extended and applied to both a case of repeatedly transmitting the channel and a case of dividing and transmitting the channel, in different time/frequency/spatial resources.

Hereinafter, a PUCCH power control configuration/indication and a PUCCH repetition configuration will be described.

In Rel-15/16 NR, nominal power configured by a base station for each PUCCH resource (i.e., P0_nominal, e.g., unit is dBm) may be determined by a value of 'p0-nominal' field/parameter in RRC parameter/information element (IE) 'PUCCH-ConfigCommon' for a common PUCCH configuration exemplified in table 7 above. If the value is not configured/provided by a base station, the nominal power (i.e., P0_nominal) becomes 0 [dBm].

An open-loop (OL) /closed-loop (CL) parameter excluding P0_nominal for each PUCCH resource may be configured by activating/updating/associating a PUCCH spatial relationship information identifier (i.e., 'pucch-Spatial-RelationInfoId') for a specific PUCCH resource through a MAC control element (CE) message.

In the association operation, an identifier (i.e., 'p0-PUCCH-Id') of power (P0) (e.g., unit is dBm) configured by a base station for PUCCH, an identifier of PUCCH pathloss reference RS (i.e., 'pucch-PathlossReferenceRS-Id') and a closed loop index (i.e., 'closedLoopIndex') are included in parameters of spatial relationship information (i.e., 'pucch-SpatialRelationInfo') of one PUCCH.

If an identifier of PUCCH spatial relationship information (i.e., 'pucch-SpatialRelationInfoId') is not activated/updated/associated with a specific PUCCH resource, for power (P0) (i.e., P0_pucch) value configured by a base station for a PUCCH, a terminal may utilize a power value (P0) (i.e., P0-PUCCH) configured by a base station for a PUCCH corresponding to an identifier ('p0-PUCCH-Id') of the minimum PUCCH P0 identifier in a set (i.e., 'p0-Set') of dedicated P0 values for the PUCCH, and may utilize l=0 for a closed-loop index l. In addition, for a pathloss reference RS, if pathloss reference RSs (i.e., 'pathlossReferenceRSs') in an IE (i.e., 'PUCCH-PowerControl' IE) for configuring UE-specific parameters for power control of a PUCCH have not been configured by RRC signaling or have been configured before, in order to acquire a master information block (MIB) in an initial access step, a terminal may utilize an SS/PBCH resource block indicator (SSB-RI) corresponding to an SSB index used when transmitting a physical random access channel (PRACH). On the other hand, when pathloss reference RSs (i.e., 'pathlossReferenceRSs') are configured by RRC signaling, a terminal may use a pathloss reference RS corresponding to an identifier ('pucch-PathlossReferenceRS-Id') of a pathloss reference RS for a PUCCH having index 0.

Table 11 illustrates for Rel-15/16 PUCCH repetitions.

[Table 11]

| |
|---|
| For PUCCH formats 1, 3, or 4, a UE can be configured a number of slots, by a parameter for a number of slots (i.e., 'nrofSlots') (value of any one of 2, 4, and 8). |
| - Definition of the slot |
| i) In the case of FDD, the repeated slots are consecutive slot(s) |
| ii) In the case of TDD, based on a start symbol and allocation length indicator value (SLIV) configured in a corresponding PUCCH, slot(s) with a flexible symbol whose time domain (TD) resource is not a UL symbol or an SSB symbol by SLIV in a slot |
| - In the repeated PUCCH, frequency hopping can be configured as inter-slot hopping or intra-slot hopping |
| - When the repeated PUCCH collides with a PUSCH, the PUCCH is transmitted without transmitting the PUSCH even if a piggyback condition is satisfied |
| - Priority rule: HARQ-ACK > SR > CSI with high priority > CSI with lower priority |
| i) Do not expect starting slots of two (repeated) PUCCHs to be the same. |
| ii) When two (repeated) PUCCHs with the same priority collide, the one with earlier starting slot takes precedence. |
| iii) If two (repeated) PUCCHs collide, the one with higher priority is transmitted according to the above priority rule. |

In addition, in Rel-16 enhanced MIMO (eMIMO), for multi-TRP (multi-TRP) PDSCH transmission, standardization has been performed for single DCI-based PDSCH transmission and multi-DCI-based PDSCH transmission. In Rel-17 FeMIMO (further enhanced MIMO), standardization is planned for multi-TRP transmission (e.g., PDCCH, PUCCH, PUSCH, etc.) excluding a PDSCH (hereinafter, multi-TRP is referred to as M-TRP, MTRP, etc.). In M-TRP UL transmission (PUCCH, PUSCH), a transmission occasion (TO) group corresponding to each TRP can be configured/defined, and before each (PUCCH/PUSCH) TO transmission configuration/indication/scheduling/triggering, a configuration of a transmission method of each TO may be performed by a base station. For example, in the case of M-TRP PUSCH transmission, single DCI-based scheduling and multi-DCI-based scheduling are possible, and prior to such scheduling (or through scheduling indication), a timing advance (TA), a rank, a PUSCH DMRS port(s), a transmit precoding matrix indicator (TPMI), a modulation coding and scheme (MCS), a (OL/CL) power control parameter set, a Tx beam (spatial relation), a spatial panel (Tx panel), etc. may be configured/indicated for two or more multiple TOs.

Table 12 illustrates FeMIMO work items related to M-TRP enhancement.

[Table 12]

| |
|---|
| Enhancement on the support for multi-TRP deployment, targeting both FR1 and FR2: |
| a. Identify and specify features to improve reliability and robustness for channels other than a PDSCH (i.e., PDCCH, PUSCH, and PUCCH) using multi-TRP and/or multi-panel, with Rel.16 reliability features as the baseline. |
| b. Identify and specify QCL/TCI-related enhancements to enable inter-cell multi-TRP operations, assuming multi-DCI based multi-PDSCH reception. |
| c. Evaluate and, if needed, specify beam-management-related enhancements for simultaneous multi-TRP transmission with multi-panel reception. |
| d. Enhancement to support high speed train-single frequency network (HST-SFN) deployment scenario: |
| i) Identify and specify solution(s) on QCL assumption for a DMRS (e.g., multiple QCL assumptions for the same DMRS port(s), targeting DL-only transmission). |
| ii) Evaluate and, if the benefit over Rel.16 HST enhancement baseline is demonstrated, specify QCL/QCL-like relation (including applicable type(s) and the associated requirement) between DL and UL signal by reusing the unified TCI framework. |

As described above, in NR Rel-15 and Rel-16, an operation in which a base station can configure the number of repetitions according to a PUCCH format (e.g., PUCCH formats 1, 3, and 4) in PUCCH transmission of a terminal is defined. In addition, an operation in which a base station performs power control to determine transmission power in PUCCH transmission (e.g., A/N (ACK/NACK), CSI report, scheduling requests (SR), beam failure recovery (BFR)) of a terminal is defined. The power control operation includes an operation in which a base station configures/indicates an open-loop power control parameter and configures/indicates closed-loop power control parameter information to a terminal. The above operations are basically targeting single-TRP (S-TRP). Therefore, when a terminal performs multi-TRP (M-TRP) UL PUCCH transmission, in a PUCCH transmission operation and a power control operation, an operation of configuring/activating/indicating transmission of PUCCHs toward different TRPs by a base station and an operation of separately configuring/providing/indicating open-loop/closed-loop power control information for each PUCCH to a terminal are required.

Based on this background, in the present disclosure, in the M-TRP scenario, a method in which a base station configures/activates/indicates PUCCH transmission (e.g., A/N, CSI reporting, SR, BFR) of a terminal is proposed, and a subsequent PUCCH transmission method of a terminal is proposed.

In the present disclosure, '/' may be interpreted as 'and', 'or', or 'and/or' depending on the context.

Hereinafter, for convenience of description, it is mainly described in consideration of M-TRP PUCCH TDM repeated transmission of a single-panel terminal, but other scenarios (e.g., TDM transmission of a multi-panel terminal and FDM, SDM transmission of a terminal) are not excluded and can be included in the proposed methods of the present disclosure.

Hereinafter, for convenience of description in the present disclosure, an A/N (ACK/NACK) PUCCH is mainly exemplified and described, but the present disclosure is not limited thereto, and it may be applied to a PUCCH for all of A/N, CSI reporting, SR, and BFR.

Proposal (Embodiment) 1: M-TRP transmission configuration/indication method and/or repetition configuration/indication method for PUCCH transmission

Referring to an existing Rel-15/16 A/N PUCCH transmission operation, in the case of ACK/NACK (A/N) PUCCH for a HARQ operation, a PUCCH resource is indicated as follows. A base station indicates a PUCCH resource ID corresponding to a maximum 8th value according to a bit field size (i.e., 0, 1, 2, 3 bits) from the first value of a specific PUCCH resource set (e.g., PUCCH resource set identifier (ID) = 0) through a PUCCH resource indicator (PRI) field of DL grant DCI. Accordingly, a PUCCH resource for transmitting an A/N by a terminal is indicated for a PDSCH scheduled by DL grant DCI. If a PRI field in DL grant DCI is 0, a terminal utilizes a PUCCH resource ID corresponding to the first value in the corresponding PUCCH resource set.

Proposal (Embodiment) 1-1: M-TRP transmission configuration/indication method for PUCCH transmission

Option 1) A base station may configure/indicate to a terminal a specific CORESET (group) identity (ID) (e.g., CORESET ID, CORESET pool index) and/or a search space set (SS set) identity for configuring/indicating M-TRP transmission of an A/N PUCCH of a terminal. When a terminal receives DL grant DCI through a CORESET/SS set corresponding to the specific CORESET (group) ID and/or SS set ID, the terminal may transmit an (A/N) PUCCH resource indicated by a PRI field of the corresponding DCI for different i (i is a natural number) TRPs and/or i TO groups. In other words, a terminal can transmit an (A/N) PUCCH resource indicated by a PRI field of a corresponding DCI for each TO group (i.e., a terminal can transmit a PUCCH carrying A/N on the corresponding PUCCH resource).

In general, when a terminal transmits a PUCCH on a PUCCH resource in which M-TRP transmission is configured, the terminal may transmit the PUCCH for i (i is a natural number) different TRPs or/and i TO groups on the corresponding PUCCH resource. More specifically, a terminal may be configured to transmit a PUCCH in a plurality of TOs, and the plurality of TOs may be divided into i TO groups. Here, each TO group may include one or more TOs.

An open-loop power control parameter of a PUCCH (e.g., PUCCH carrying A/N, CSI reporting, SR, BFR) to be transmitted for the different i TRPs or/and i TO groups may be configured/indicated as follows. For power P0 (P0_PUCCH) configured by a base station for a PUCCH, a P0 (P0_PUCCH) value for a PUCCH for an identifier value of a P0 value ('p0-PUCCH-Id') for the (i-1)th PUCCH in the corresponding set from the minimum PUCCH P0 identifier ('p0-PUCCH-Id') in a set of dedicated P0 values for a PUCCH (i.e., 'p0-Set') may correspond (in a form of an ordered pair) to each i TRP and/or i TO group. In addition, for a pathloss reference RS, pathloss reference RSs corresponding to identifiers of pathloss reference RSs ('pucch-PathlossReferenceRS-Id') for a PUCCH from index 0 to index i-1 may correspond to each i TRP or/and i TO group (in a form of an ordered pair). In the case of PUCCH transmission for a primary/default TRP/TO group (e.g., TRP 0 or TO group 0) in the above operation, an basic operation in existing Rel-15/16, that is, an open-loop/closed-loop power control parameter corresponding to the minimum PUCCH P0 identifier ('p0-PUCCH-Id') in a set of dedicated P0 values for a PUCCH (i.e., 'p0-Set'), an identifier of a pathloss reference RS ('pucch-PathlossReferenceRS-Id') for a PUCCH having an index 0 may be mapped/corresponded. In addition, in a closed-loop power control parameter, in addition to a default value I=0, a base station can configure closed-loop indexes to be used for each i TRP or/and i TO group.

Alternatively, when performing M-TRP PUCCH transmission (e.g., PUCCH carrying A/N, CSI reporting, SR, BFR) by utilizing a single PUCCH resource as described above, for some (one or more) PUCCH resources (up to 128 PUCCH resources) among PUCCH resources configured in an RRC IE for PUCCH configuration (i.e., PUCCH-config), multiple IDs of P0 (i.e., 'p0-PUCCH-Id') for a specific PUCCH and/or multiple pathloss reference RS identifiers (i.e., pucch-PathlossReferenceRS-Id) for a PUCCH and/or multiple closed-loop indexes may be (explicitly) configured or associated in an IE for PUCCH power control (i.e., 'pucch-PowerControl' IE) in an RRC IE for PUCCH configuration (i.e., PUCCH-config). That is, for some (one or more) PUCCH resources, power control parameter sets may be configured as much as the number of TRPs and/or the number of TO groups in a power control IE (i.e., pucch-PowerControl IE) for a PUCCH in a higher layer (e.g., RRC) IE (i.e., 'PUCCH-config'). Here, each of power control parameter sets may include an identifier of P0 of a PUCCH (i.e., p0-PUCCH-Id) and/or an identifier of a pathloss reference RS of a PUCCH (i.e., pucch-PathlossReferenceRS-Id) and/or a closed loop index. Accordingly, when a PUCCH resource belonging to some of the (one or more) PUCCH resources is used for UCI transmission, multiple p0 values, multiple pathloss reference RSs, and multiple closed-loop indices may be used. That is, when a terminal uses the PUCCH resource in UCI transmission, as described above, M-TRP PUCCH transmission may be performed using a plurality of configured/associated power control parameters (sets). Here, each power control parameter (set) may be mapped/associated with each TRP and/or each TO group.

On the other hand, when a PUCCH resource other than the PUCCH resource (e.g., a PUCCH resource indicated by a PRI field of DL grant DCI received through a CORESET/SS set corresponding to the configured specific CORESET (group) ID or/and SS set ID) is utilized in UCI transmission of a terminal, the terminal may perform S-TRP PUCCH transmission. And/or, if a configuration condition and/or an indication, etc. for enabling an M-TRP PUCCH (e.g., PUCCH carrying A/N, CSI reporting, SR, BFR) are defined, a terminal may perform M-TRP PUCCH transmission according to the configuration condition and/or the indication. Here, as described above, when a single PUCCH resource in which multiple power control (PC) parameters (sets) are configured is used for M-TRP PUCCH transmission, a terminal may perform M-TRP PUCCH transmission by utilizing the corresponding multiple PC parameters (sets). Here, each of the multiple PC parameters (set) may correspond to/related to each TRP and/or each TO group. On the other hand, when the corresponding PUCCH resource is used for S-TRP PUCCH transmission, a terminal may utilize a PC parameter set having a default and/or specific ID (e.g., lowest ID, highest ID) among a plurality of PC parameter sets configured/related to the corresponding PUCCH for power control during PUCCH transmission.

And/or, if a configuration condition and/or an indication, etc. for enabling an M-TRP PUCCH (e.g., PUCCH carrying A/N, CSI reporting, SR, BFR) are defined, depending on the configuration condition/indication, a terminal may perform M-TRP PUCCH transmission or S-TRP PUCCH transmission on the corresponding PUCCH resource. That is, a terminal may perform M-TRP PUCCH transmission or S-TRP PUCCH transmission according to the configuration condition and/or indication for whether to enable or not. Specifically, when a terminal performs M-TRP PUCCH transmission, the terminal may transmit a PUCCH using multiple power control parameter sets configured in a PUCCH configuration (i.e., 'PUCCH-config') in the indicated single PUCCH resource. Here, each of multiple PC parameters (sets) may correspond to/related to each TRP and/or each TO group. On the other hand, when M-TRP PUCCH transmission is disabled, in the indicated single PUCCH resource, a PUCCH may be transmitted using only one specific set (e.g., power control (PC) parameter set with the lowest index) among a plurality of power control parameter sets configured in a PUCCH configuration (i.e., 'PUCCH-config').

Alternatively, power control parameters may be divided into groups as much as the number of TRPs and/or TO groups and may configured in a power control IE for a PUCCH (i.e., pucch-PowerControl IE) in a higher layer (e.g., RRC) IE (e.g., 'PUCCH-config') for configuration of a PUCCH (e.g., PUCCH carrying A/N, CSI reporting, SR, BFR). Here, each group of the power control parameter set may include a p0 identifier of a PUCCH (i.e., p0-PUCCH-Id) and/or an identifier of a pathloss reference RS of a PUCCH (i.e., pucch-PathlossReferenceRS-Id) and/or a closed loop index (closed loop index). More specifically, for a p0 identifier of a PUCCH (i.e., p0-PUCCH-Id) and/or an identifier of a pathloss reference RS of a PUCCH (i.e., pucch-PathlossReferenceRS-Id) and/or a closed-loop index which are open-loop/closed loop parameters configured in a power control IE for a PUCCH (i.e., pucch-PowerControl IE) in a higher layer (e.g., RRC) IE for configuration of a PUCCH (i.e., 'PUCCH-config'), a base station may divide and configure each parameter into as many groups as the number of TRPs (e.g., two) through higher layer signaling (e.g., RRC signaling). That is, in a power control IE for a PUCCH (i.e., pucch-PowerControl IE), as many power control parameters as the number of TRPs and/or the number of TO groups may be divided into groups and configured. For example, when p0 identifiers (i.e., p0-PUCCH-Id) of PUCCHs from index 0 to index 7 are configured/present, index 0 to index 3 may be configured/mapped as group 0, and index 4 to index 7 may be configured/mapped as group 1. Similarly, for example, if identifiers of pathloss reference RSs of PUCCHs from index 0 to index 63 (i.e., pucch-PathlossReferenceRS-Id) are configured/present, index 0 to index 31 may be configured/mapped as group 0, and index 32 to index 63 may be configured/mapped as group 1. A base station may configure or associate indexes of specific parameters (ie, P0, pathloss (PL) RS, closed-loop index, etc.) within each group as many as the number of groups to the single PUCCH resource. A base station may configure or associate indexes of specific parameters (i.e., P0, pathloss (PL) RS, closed-loop index, etc.) in each group as many as the number of groups to the single PUCCH resource. When the corresponding PUCCH resource is utilized in UCI transmission, a terminal may perform M-TRP PUCCH transmission by utilizing multiple configured/related power control parameters (sets) as described above. If one parameter (set) is configured/associated with the single PUCCH resource, a terminal may perform S-TRP PUCCH transmission.

Alternatively, if a configuration condition or/and an indication, etc. for enabling an M-TRP PUCCH is defined and a terminal performs M-TRP PUCCH transmission according to the configuration condition or/and the indication, the terminal may perform M-TRP transmission of the indicated single PUCCH resource by utilizing a PC parameter(s) having the lowest index in each of the power control (PC) parameter groups. On the other hand, when M-TRP PUCCH transmission is disabled, a terminal may perform S-TRP transmission of the indicated single PUCCH resource by using a PC parameter(s) having the lowest index in the group having the lowest index among the power control (PC) parameter groups.

If M-TRP PUCCH transmission is performed using multiple PC parameter sets of the single PUCCH resource, a base station may configure/indicate a terminal to use a specific PC parameter set for a specific PUCCH TO group. That is, a mapping/association relationship with each PUCCH TO group may be configured/indicated for each of multiple PC parameter sets. For example, if there are 4 PUCCH TOs for PUCCH resources, i) whether PC parameter set 0 and PC parameter set 1 configured/related to the corresponding PUCCH resource are alternately applied to the 4 PUCCH TOs, or ii) whether PC parameter set 0 is applied to the preceding 2 PUCCH TOs (earlier in a time domain) and PC parameter set 1 is applied to the following 2 PUCCH TOs (later in a time domain) may be configured/indicated. In general, in the case of i), when a PUCCH is transmitted in a plurality of TOs as many times as a repetition value of the PUCCH, and when the plurality of TOs are associated with N (N is a natural number) PC parameter sets (i.e., when multiple TOs are mapped/grouped to N TRPs and/or N TO groups), N PC parameter sets can be cyclically applied to a plurality of TOs in units of one TO (i.e., a plurality of TOs may be cyclically mapped to N TRPs (i.e., TO groups) in units of one TO). In addition, in the case of ii), when a PUCCH is transmitted in a plurality of TOs as many times as a repetition value of the PUCCH, and when the plurality of TOs are associated with PC parameter sets (i.e., when multiple TOs are mapped/grouped to N TRPs and/or N TO groups), N PC parameter sets can be cyclically applied to a plurality of TOs in units of one TO (Here, 'two TO units' is for convenience of description, and the present disclosure is not limited thereto. Therefore, the two TO units can be interpreted as a repetition value (i.e., the number of a plurality of TOs) divided by N units.).

Through the operation of the option 1, whether to transmit an M-TRP of an A/N PUCCH may be configured/indicated per CORESET (group) ID (e.g., CORESET ID, CORESET pool index) and/or search space set (SS set) ID. Accordingly, a base station may configure/indicate whether to transmit S-TRP transmission or M-TRP transmission in PUCCH transmission of a terminal according to which CORESET or SS set is used. In addition, a base station may also configure/indicate power control information for different M-TRP PUCCHs. In addition, through the above operation, even if PUCCH spatial relationship information (i.e., PUCCH-SpatialRelationInfo) for a PUCCH resource to be mapped to a PRI field is not configured/activated, there is an advantage that multiple power control parameter sets can be configured in M-TRP PUCCH transmission.

The operation of option 1 may also be applied/utilized in M-TRP PUCCH (e.g., PUCCH carrying A/N, CSI reporting, SR, BFR) transmission through different PUCCH resources of a terminal. For example, when PUCCH spatial relationship information (i.e., PUCCH-SpatialRelationInfo) is not configured/activated in different PUCCH resources (or in FR 1 operation), the case where a base station configures/indicates the different PUCCH resource(s) of a terminal to perform M-TRP PUCCH transmission is considered. For example, it may configured/indicated that a PUCCH transmitted on a specific PUCCH resource is toward a specific TRP, and a PUCCH transmitted on other PUCCH resources is transmitted toward a TRP different from the specific TRP.

Here, a base station may configure/indicate a terminal to transmit the same content (i.e., information carried by PUCCH, e.g., A/N, CSI report, SR, BFR) toward different TRPs by utilizing the different PUCCH resource(s).

Pairing/grouping for the different PUCCH resource(s) corresponding to/associated with the different TRPs and/or different PUCCH TO groups may be configured. More specifically, the different PUCCH resource(s) may be i) explicitly paired/grouped by a configuration of a base station (e.g., pairing/grouping by RRC configuration or pairing/grouping by connecting/configuring/mapping different PUCCH resources to a specific codepoint of a PRI field). Alternatively, ii) pairing/grouping may be implicitly performed on the different PUCCH resource(s) (e.g., pairing/grouping of i-th PUCCH resources within each PUCCH group, etc.). When transmission of the (pairing/grouping) different PUCCH resources is configured/indicated by a base station, a terminal may recognize (regard) that M-TRP PUCCH transmission is configured/indicated and may transmit the different PUCCH resources.

In order to determine Tx beam reference RSs for the different PUCCH resources, (e.g., when PUCCH spatial relationship information (i.e., PUCCH-SpatialRelationInfo) is configured/activated) Tx beam information of spatial relationship information (i.e., PUCCH-SpatialRelationInfo) of a PUCCH configured/activated for each PUCCH resource may be used. And/or, (when PUCCH spatial relationship information (i.e., PUCCH-SpatialRelationInfo) is not configured/activated or in case of FR1 operation), Tx beam reference RSs for the different PUCCH resources can be implicitly determined. Specifically, for a PUCCH resource having the lowest ID among different PUCCH resources, a QCL type-D reference RS configured for the lowest CORESET among CORESETs having a CORESET pool index 0 (in a component carrier (CC)/BWP where the corresponding PUCCH resource is configured) can be used as a transmission beam reference RS. In addition, for a PUCCH resource having the second-lowest ID, a QCL type-D reference RS configured for the lowest CORESET among CORESETs having a CORESET pool index 1 (in a CC/BWP where the corresponding PUCCH resource is configured) can be used as a transmission beam reference RS. In the above description, two PUCCH resources have been described, but this is for convenience of explanation, and can be extended to three or more different PUCCH resources. Alternatively, for a PUCCH resource with the lowest ID and a PUCCH resource with the second-lowest ID, QCL type-D references configured in the lowest CORESET and the second-lowest CORESET respectively (in a CC/BWP in which the corresponding PUCCH resource is configured) can be used as a transmission beam reference RSs.

To determine transmission power of the different PUCCH resources, (when PUCCH spatial relationship information (i.e., PUCCH-SpatialRelationInfo) is configured/activated) power control information of spatial relationship information (i.e., PUCCH-SpatialRelationInfo) of a PUCCH configured/activated in each PUCCH resource may be utilized. Alternatively, (when PUCCH spatial relationship information (i.e., PUCCH-SpatialRelationInfo) is not configured/activated or in case of FR1 operation), the operation of option 1 may be performed to determine transmission power of different PUCCH resources. For example, in P0 of a PUCCH (i.e., p0-PUCCH) and a pathloss reference RS of a PUCCH (i.e., pucch-PathlossReferenceRS), which are open-loop parameters, for a PUCCH resource having the lowest ID among the different PUCCH resources, a P0 identifier (i.e., p0-PUCCH-Id) of the lowest PUCCH and the lowest pathloss reference RS identifier (i.e., pucch-PathlossReferenceRS-Id) of the PUCCH can be used. In addition, for a PUCCH resource having the second-lowest ID, a P0 identifier (i.e., p0-PUCCH-Id) of the second-lowest PUCCH and a pathloss reference RS identifier (i.e., pucch-PathlossReferenceRS-Id) of the second-lowest PUCCH may be used. In the above description, two PUCCH resources have been described, but this is for convenience of explanation, and can be extended to three or more different PUCCH resources. In addition, for a closed-loop index, which is a closed-loop parameter, the lowest index (i.e., l=0) can also be used for a PUCCH resource having the lowest ID among the different PUCCH resources. And, the second-lowest index (i.e., l = 1) may be used for a PUCCH resource having a second-lowest ID among the different PUCCH resources. Alternatively, for a PUCCH resource having the lowest ID and a PUCCH resource having the second-lowest ID among the different PUCCH resources, a P0 identifier (i.e., p0-PUCCH-Id) and/or a pathloss reference RS identifier of a PUCCH (i.e., pucch-PathlossReferenceRS-Id) and/or a closed-loop index for a specific PUCCH configured in a power control IE of a PUCCH (i.e., pucch-PowerControl IE) in a higher layer (e.g., RRC) IE (i.e., PUCCH-config IE) for configuration of a PUCCH through an explicit method (e.g., RRC signaling/MAC CE) may be configured or associated. For example, when PUCCH resource 3 and PUCCH resource 6 are paired, a p0-PUCCH value corresponding to a P0 identifier of a PUCCH (i.e., p0-PUCCH-Id) = 0 is configure/associated for PUCCH resource 3, and a p0-PUCCH value corresponding to a P0 identifier of a PUCCH (i.e., p0-PUCCH-Id) = 2 may be configured/associated for PUCCH resource 6.

Alternatively, power control parameters may be divided into groups as much as the number of TRPs and/or TO groups and may be configured in a power control IE for a PUCCH (i.e., pucch-PowerControl IE) in a higher layer (e.g., RRC) IE for configuration on a PUCCH (i.e., 'PUCCH-config'). Here, each group of power control parameter sets may include a p0 identifier of a PUCCH (i.e., p0-PUCCH-Id) and/or an identifier of a pathloss reference RS of a PUCCH (i.e., pucch-PathlossReferenceRS-Id) and/or a closed loop index. More specifically, for a p0 identifier of a PUCCH (i.e., p0-PUCCH-Id) and/or an identifier of a pathloss reference RS of a PUCCH (i.e., pucch-PathlossReferenceRS-Id) and/or a closed-loop index, which are open-loop/closed-loop power control parameters configured in a power control IE (i.e. pucch-Power-Control IE) for a PUCCH in a higher layer (e.g., RRC) IE (i.e. 'PUCCH-config'), a base station may divide and configure each parameter into as many groups as the number of TRPs (e.g., two) through higher layer signaling (e.g., RRC signaling). That is, in the power control IE for a PUCCH (i.e., pucch-PowerControl IE), as many power control parameters as the number of TRPs and/or the number of TO groups may be divided into groups and configured. That is, in the power control IE for PUCCH (ie, pucch-PowerControl IE), as many power control parameters as the number of TRPs and/or the number of TO groups may be divided into groups and set. For example, when p0 identifiers (i.e., p0-PUCCH-Id) of PUCCHs from index 0 to index 7 are configured/present, index 0 to index 3 may be configured/mapped as group 0, and index 4 to index 7 may be configured/mapped as group 1. Similarly, for example, if identifiers of pathloss reference RSs of PUCCHs from index 0 to index 63 (i.e., pucch-PathlossReferenceRS-Id) are configured/present, index 0 to index 31 may be configured/mapped as group 0, and index 32 to index 63 may be configured/mapped as group 1. In a PC parameter configuration/association when a terminal performs M-TRP transmission through the different (paired) PUCCH resource, for a PUCCH resource having the lowest ID among the different PUCCH resources, a p0 identifier (i.e., p0-PUCCH-Id) of the lowest PUCCH in group 0 and an identifier of a pathloss reference RS (i.e., pucch-PathlossReferenceRS-Id) of the lowest PUCCH can be used. And, for a PUCCH resource having the second-lowest ID, a p0 identifier (i.e., p0-PUCCH-Id) of the lowest PUCCH in group 1 and an identifier of the lowest pathloss reference RS (i.e., pucch-PathlossReferenceRS-Id) can be used. In the above description, two PUCCH resources have been described, but this is for convenience of explanation, and can be extended to three or more different PUCCH resources. Also, for a closed-loop index, which is a closed-loop parameter, the (lowest) closed-loop index belonging to group 0 may be used for a PUCCH resource having the lowest ID among the different PUCCH resources. And, the (lowest) closed loop index belonging to group 1 may be used for a PUCCH resource having a second-lowest ID among the different PUCCH resources.

Alternatively, parameter(s) having a specific index/identifier from each group may be configured/associated for each of the different (paired) PUCCH resources by a configuration of a base station. For example, when PUCCH resource 3 and PUCCH resource 6 are paired, a p0 value (i.e., p0-PUCCH) of a PUCCH corresponding to a p0 identifier (i.e., p0-PUCCH-Id) = 0 of a PUCCH belong to group 0 may be configured/associated for PUCCH resource 3. And, a p0 value (i.e., p0-PUCCH) of a PUCCH corresponding to a p0 identifier (i.e., p0-PUCCH-Id) = 5 of a PUCCH belong to group 1 may be configured/associated for PUCCH resource 6.

If M-TRP PUCCH transmission is performed using the different PUCCH resources, a base station may configure/indicate a terminal to use a specific PUCCH resource for a specific PUCCH TO group. That is, a mapping/association relationship with each PUCCH TO group may be configured/indicated for each of multiple PUCCH resources. For example, if there are 4 PUCCH TOs for 2 PUCCH resources, i) whether the different PUCCH resources are alternately transmitted on the 4 PUCCH TOs, or ii) whether a specific PUCCH resource is transmitted on the preceding 2 PUCCH TOs (earlier in a time domain) and the remaining PUCCH resource is transmitted on the following 2 PUCCH TOs (later in a time domain) may be configured/indicated. In general, in the case of i), when a PUCCH is transmitted in a plurality of TOs as many times as a repetition value of the PUCCH, and when the plurality of TOs are mapped/grouped to N (N is a natural number) PUCCH resources (i.e., TRPs, TO groups), the plurality of TOs may be cyclically mapped to N PUCCH resources (i.e., TRPs and/or TO groups) in units of one TO. In addition, in the case of ii), when a PUCCH is transmitted in a plurality of TOs as many times as a repetition value of the PUCCH, and when the plurality of TOs are mapped/grouped to N (N is a natural number) PUCCH resources (i.e., TRPs and/or TO groups), the plurality of TOs may be cyclically mapped to N PUCCH resources (i.e., TRPs and/or TO groups) in units of two TOs (Here, 'two TO units' is for convenience of description, and the present disclosure is not limited thereto. Therefore, the two TO units can be interpreted as a repetition value (i.e., the number of a plurality of TOs) divided by N units.).

Option 2) When a base station configures/activates a PUCCH resource in a PUCCH resource set (i.e., PUCCH resource set identifier (ID) = 0) for an A/N PUCCH of a terminal, for PUCCH resources mapped to a PRI field, up to i (i is a natural number) PUCCH spatial relationship information (parameter PUCCH-SpatialRelationInfo), which is a parameter providing a PUCCH transmission beam and a power control parameter, may be configured/activated/updated. Due to the above operation, a base station indicates PUCCH resources in which i PUCCH spatial relationship information (PUCCH-SpatialRelationInfo) are configured/activated/updated through a PRI field when PDSCH scheduling through DL grant DCI, therefore M-TRP transmission for an A/N PUCCH of a terminal can be indicated.

Alternatively, an on (active) / off (inactive) indication for M-TRP transmission may be joint encoded in a PRI field of DL grant DCI. Accordingly, when a base station indicates a PRI field, S-TRP/M-TRP PUCCH transmission may be dynamically switched according to which codepoint is indicated by a PRI field. Among codepoints indicated by a PRI field, a codepoint in which M-TRP transmission is configured may be present/defined, and a codepoint in which M-TRP transmission is not configured may be present/defined.

The i corresponding to the number of PUCCH-SpatialRelationInfo configured/activated/updated in the PUCCH resource may correspond (in a form of ordered pairs) to the number of TRPs or/and the number of TO groups targeting PUCCH transmission (there is more than one TO in the TO group).

Since through the operation of option 2, a base station can indicate that a terminal performs M-TRP transmission for an A/N PUCCH by using an existing PRI field and transmission beams and open-loop/closed-loop power control parameters for each A/N PUCCH can be provided, when a terminal transmits different A/N PUCCHs, it is possible to transmit PUCCHs to different TRPs without ambiguity. In addition, regardless of which CORESET and search space set (SS set) is used to transmit DL grant DCI among all CORESETs and search space sets (SS set), there is an advantage that it is possible to dynamically indicate whether S-TRP PUCCH transmission or M-TRP PUCCH transmission is performed through a PRI field.

Option 3) When a base station configures/activates a PUCCH resource in a PUCCH resource set (i.e., PUCCH resource set identifier (ID) = 0) for a PUCCH (e.g., PUCCH carrying A/N, CSI reporting, SR, BFR) of a terminal, similar to the existing operation, up to one PUCCH spatial relationship information (parameter PUCCH-SpatialRelationInfo) can be configured/activated/updated. If a terminal transmits a PUCCH through the PUCCH resource (i.e., PUCCH resource configured/indicated by a CORESET (group) ID or/and SS set ID through which DL grant DCI is transmitted as in option 1, or PUCCH resource configured/indicated by a codepoint of a PRI field as in option 2) for which M-TRP transmission is configured/indicated, a power control operation and a transmission beam operation of a PUCCH for each TRP and/or each PUCCH TO group are as follows. A (basic) power control operation and a transmission beam operation when PUCCH spatial relationship information (PUCCH-SpatialRelationInfo) is not configured can be used for PUCCH transmission for a specific TRP and/or a specific TO group. In addition, a power control operation and a transmission beam operation according to spatial relationship information (PUCCH-SpatialRelationInfo) of the configured/activated PUCCH can be used for PUCCH transmission for other TRP and/or other PUCCH TO group. In the case of PUCCH transmission for a primary/default TRP and/or PUCCH TO group (e.g., TRP 0 or PUCCH TO group 0) in the above operation, open-loop/closed-loop power control parameters corresponding to a basic operation (i.e., a P0 value corresponding to the minimum PUCCH P0 identifier (minimum p0-PUCCH-Id) in a P0 set, or a pathloss reference RS identifier (pucch-PathlossReferenceRS-Id) of a PUCCH having index 0, or closed-loop index 0) in existing Rel-15/16 may be mapped/-corresponded.

The M-TRP transmission configuration/indication for A/N PUCCH transmission of a terminal may be performed through a specific CORESET (group) ID (e.g., CORESET ID, CORESET pool index) and a search space set (SS set) ID as in option 1. Alternatively, M-TRP transmission on/off may be configured/activated for each PUCCH resource.

There is an advantage in that the M-TRP PUCCH transmission operation can be configured/indicated while utilizing a structure of an RRC/MAC layer and a PRI indication method of the existing standard through the operation of option 3.

Operations of the options (options 1/2/3) of the above-described proposal (embodiment) 1-1 may be performed independently of each other, or/and operations of the respective options may be performed in combination.

Proposal (Embodiment) 1-2: repetition configuration/indication method for PUCCH

Hereinafter, repetition of a PUCCH in the present disclosure means that a PUCCH is repeatedly transmitted in a plurality of PUCCH TOs. Here, a PUCCH may be repeatedly transmitted in a plurality of PUCCH TOs in a single PUCCH resource, or a PUCCH may be repeatedly transmitted in a plurality of PUCCH TOs for a plurality of PUCCH resources (e.g., each PUCCH resource corresponds to each TRP and/or each PUCCH TO group). Also, as in the above proposal (embodiment) 1-1, a plurality of PUCCH TOs may be grouped into a plurality of PUCCH TO groups, and each PUCCH TO group may correspond to each TRP. In addition, a power control parameter (set) and/or a transmission beam of a PUCCH corresponding to each PUCCH TO group and/or each TRP may be determined according to the above proposal (embodiment) 1-1.

Option 1) As described above, according to the existing Rel-15/16 PUCCH repetition operation, a base station may configure semi-statically (e.g., by RRC-level signaling) PUCCH repetition for each PUCCH format (see Table 11 above).

Option 2) A base station may configure repetition on/off including a repetition number configuration through higher layer signaling (e.g., RRC setting/MAC CE activation) for each PUCCH resource.

Option 3) When a base station schedules a PDSCH through DL grant DCI, the base station may configure/indicate PUCCH repetition on/off of a terminal with a dependency depending on whether Rel-16 M-TRP PDSCH repetition is configured/indicated. That is, as the PDSCH repetition is configured, PUCCH repetition transmitted in response to the corresponding PDSCH may be configured, and vice versa. For example, when a repetition PDSCH is scheduled, a terminal may apply the same repetition information (i.e., time domain resource allocation (TDRA) information, number of repetitions, TO information, etc.) of the corresponding PDSCH to PUCCH repetition during A/N PUCCH transmission. Here, the number of PUCCH repetitions according to the repetition information of the PDSCH may be configured/indicated as x times or 1/x times the number of PDSCH repetitions (x is a natural number).

Option 4) A base station may perform a repetition on/off configuration including a configuration of the number of repetitions of an A/N PUCCH in a CORESET configuration or/and an SS set configuration. For example, when a terminal receives DL grant DCI through the CORESET or/and SS set, the terminal may perform PUCCH repetition transmission based on A/N PUCCH repetition configuration information (i.e., a PUCCH repetition number configuration and/or a repetition on/off configuration in a configuration for a CORESET or/and an SS set in which DL grant DCI scheduling a PDSCH is received) for the corresponding PDSCH. As another example, when a terminal receives DL grant DCI through a CORESET in which an M-TRP PDCCH repetition is configured (e.g., a CORESET with multiple TCI states configured/enabled for DCI reception from M-TRP), the terminal may perform PUCCH repetition transmission using the same PDCCH repetition setting information (i.e., TDRA information, the number of repetitions, TO information, etc.) for an A/N PUCCH for a PDSCH received by the corresponding DCI. Here, the number of PUCCH repetitions according to the repetition information of the PDCCH may be configured/indicated as x times or 1/x times the number of PDCCH repetitions (x is a natural number).

Option 5) A base station may dynamically indicate whether or not repetition of an A/N PUCCH is performed in a PDSCH TDRA field of DL grant DCI in a form of joint encoding, repetition on/off information including the number of repetitions for A/N PUCCH transmission for the corresponding PDSCH.

Option 6) A base station may dynamically indicate whether or not repetition of an A/N PUCCH is performed in a PRI field of DL grant DCI in a form of joint encoding, repetition on/off information including the number of repetitions for A/N PUCCH transmission for the corresponding PDSCH. Among all codepoints of the PRI field, a codepoint for which PUCCH repetition is configured may be present/defined, and a codepoint for which PUCCH repetition is not configured may be present/defined. Through this, a dynamic indication is possible for general PUCCH transmission and PUCCH repetition transmission.

In a repetition on/off configuration of a PUCCH of the options (option 1 to option 6), information on whether PUCCH repetition corresponds to intra-slot repetition or corresponds to inter-slot repetition may be included. For example, information on whether it corresponds to intra-slot repetition or inter-slot repetition may be explicitly included in a PUCCH repetition on/off configuration, or this information may be indicated in a form of joint encoding.

In addition, when a PUCCH repetition operation is intra-slot repetition, the number of repetitions may be configured/indicated dynamically/semi-statically (e.g., N, where N is a natural number). And, a terminal may repeatedly transmit a PUCCH in consecutive symbols configured for the number of repetitions. If consecutive symbols due to the repetition cross a slot boundary, a terminal may not repeatedly transmit a PUCCH any more even if it does not complete N repetitions. In addition, when a repetition operation is inter-slot repetition, a terminal may similarly repeatedly transmit a PUCCH in consecutive slots in which repetition is configured. If a specific slot is used as a DL or a slot having a flexible symbol (or a slot including a flexible symbol) among the configured consecutive slots, a terminal may stop PUCCH repetitions even if N repetitions are not completed. Alternatively, if a specific slot among the configured consecutive slots is a slot having a flexible symbol, a terminal may assume/consider a high priority for the corresponding repetition PUCCH, drop another DL/UL transmission, and perform PUCCH repetition transmission.

In options 3 and 4 of the proposal (embodiment) 1-2, an operation in which M-TRP repetition transmission configuration/indication for A/N PUCCH transmission of a terminal is determined by i) whether M-TRP repetition of a PDSCH is transmitted or/and ii) whether M-TRP repetition of a PDCCH is transmitted has been proposed.

In the case of i), in PDSCH scheduling by single DCI (S-DCI) or multiple DCI (M-DCI), (different) QCL type-D RS(s) for PDSCHs to be received from different TRPs are configured/indicated. Here, corresponding (different) QCL type-D RS(s) may be used as a transmit beam RS (spatial relation RS) when transmitting PUCCHs corresponding to different TRPs and/or PUCCH TO groups (in the form of ordered pairs). In addition, the corresponding (different) QCL type-D RS(s) can be used as a pathloss reference RS for open-loop power control when transmitting PUCCHs corresponding to different TRPs and/or PUCCH TO groups (in the form of ordered pairs). Through this operation, the transmission beam and transmission power of PUCCHs corresponding to different TRPs and/or PUCCH TO groups may be determined when performing M-TRP repetition transmission of a PUCCH according to whether M-TRP repetition transmission of a PDSCH is performed.

In the case of ii), M-TRP PDCCH repetition transmission and terminal reception may be introduced in Rel-17. Here, when (different) QCL type-D RS(s) configured in a CORESET (e.g., CORESET where multiple TCI states are configured/enabled for DCI reception from M-TRP) for receiving the corresponding M-TRP PDCCH may be used as a transmit beam RS (spatial relation RS) when transmitting PUCCHs corresponding to different TRPs and/or PUCCH TO groups (in the form of an ordered pair). In addition, (different) QCL type-D RS(s) can be used as a pathloss reference RS for open-loop power control when transmitting PUCCHs corresponding to different TRPs and/or PUCCH TO groups (in the form of ordered pairs). Through this operation, the transmit beam and transmit power of PUCCHs corresponding to different TRPs and/or PUCCH TO groups can be determined when performing M-TRP repetition transmission of a PUCCH, depending on whether M-TRP repetition transmission of a PDCCH is performed.

Operations of the above-described proposal (embodiment) 1-1 and proposal (embodiment) 1-2 may be performed independently, or/and operations of the two embodiments may be performed in combination. For example, each TRP and/or PUCCH TO group may be mapped/corresponded to PUCCH repetition configured/indicated in proposal (embodiment) 1-2. Specifically, if a PUCCH repetition value is 4, in 4 repeated transmissions, i) it may be configured/indicated by a base station to perform M-TRP repeated transmission such as (TRP 1/PUCCH TO group 1, TRP 1/PUCCH TO group 1, TRP 2/PUCCH TO group 2, TRP 2/PUCCH TO group 2). In general, when a PUCCH is transmitted in a plurality of TOs as many times as a repetition value of the PUCCH, and when the plurality of TOs are mapped/grouped to N (N is a natural number) TRPs (i.e., TO groups), the plurality of TOs may be cyclically mapped to N TRPs (i.e., TO groups) in units of two TOs (Here, 'two TO units' is for convenience of description, and the present disclosure is not limited thereto. Therefore, the two TO units can be interpreted as a repetition value (i.e., the number of a plurality of TOs) divided by N units.). Alternatively, ii) it may be configured/indicated by a base station to perform circularly M-TRP repeated transmission such as (TRP 1/PUCCH TO group 1, TRP 2/PUCCH TO group 2, TRP 1/PUCCH TO group 1, TRP 2/PUCCH TO group 2). In general, when a PUCCH is transmitted in a plurality of TOs as many times as a repetition value of the PUCCH, and when the plurality of TOs are mapped/grouped to N (N is a natural number) TRPs (i.e., TO groups), the plurality of TOs may be cyclically mapped to N TRPs (i.e., TO groups) in units of one TO.

Alternatively, among the mapping/correspondence of i) or the mapping/correspondence of ii), which mapping/-correspondence is applied by a base station may be configured/indicated by the base station.

Proposal (Embodiment) 2: An M-TRP transmission configuration/indication method and/or repetition configuration/indication method for the case in which an A/N PUCCH mainly exemplified in the Proposal (Embodiment) 1 is a CSI reporting PUCCH, a scheduling request (SR) PUCCH, or semi-persistent scheduling (SPS) A/N PUCCH (or beam failure recovery (BFR) PUCCH) is proposed.

PUCCH transmissions other than the A/N PUCCH often have semi-static time-domain behavior (i.e., periodic transmission by RRC configuration, semi-persistent transmission by MAC CE activation/deactivation, etc.). Therefore, among the methods of proposal (embodiment) 1-1 (options 1 to 3) and proposal (embodiment) 1-2 (options 1 to 6) of proposal (embodiment) 1, excluding a method of dynamic properties (i.e., method related to DCI), the remaining semi-static methods may be used for PUCCH transmission other than an A/N PUCCH. Alternatively, a base station may perform to configure a repetition on/off including a configuration of the number of repetitions through RRC configuration and/or MAC CE activation for each PUCCH resource. As another example, when a base station performs an RRC configuration and/or MAC CE activation for periodic transmission or/and semi-persistent transmission, in the corresponding RRC/MAC CE message, it is possible to configure/indicate the presence or absence of repetition including a configuration the number of repetitions.

In addition, for an M-TRP PUCCH transmission configuration/indication for PUCCH transmission other than an A/N PUCCH, a base station may perform on/off switching (i.e., S-TRP transmission or M-TRP transmission) of M-TRP transmission through an RRC configuration and/or MAC CE activation for each PUCCH resource.

Regarding a configuration/indication of transmission beam information and/or power control information for M-TRP PUCCH transmission, it can be configured through the operations of option 1 to option 3 of proposal (embodiment) 1-1. Alternatively, regarding a configuration/indication of transmission beam information and/or power control information for M-TRP PUCCH transmission, a terminal can assume through the operations of option 1 to option 3 of proposal (embodiment) 1-1. Additionally, as in option 2 of proposal (embodiment) 1-1, when spatial relationship information (PUCCH-SpatialRelationInfo) of two or more PUCCHs in PUCCH resources other than the A/N PUCCH is configured/activated/updated, and when transmission of the corresponding PUCCH resource is configured/activated, a terminal may perform M-TRP transmission on the corresponding PUCCH.

In the same PUCCH repetition configured/indicated for each PUCCH resource in the above-described proposal (embodiment) 2, each TRP and/or PUCCH TO group may be mapped/corresponded to a plurality of PUCCH TOs.

In the PUCCH on which M-TRP transmission is performed in the proposals (embodiments) 1 and 2, one PUCCH may be repeatedly transmitted in each TRP/TO group or/and some and the rest (e.g., part of the symbol level is mapped by TRP/TO group. For example, 1 bit of A/N PUCCH 2 bits is transmitted in TRP 1/TO group 1, and the remaining 1 bit is transmitted in TRP 2/TO group 2) of one PUCCH may be transmitted respectively in each TRP/TO group. Alternatively, when the PUCCH is an A/N PUCCH, different M-TRP PUCCH transmissions having HARQ process IDs by different TRP/TO groups may be performed.

In proposals 1 and 2, additional configuration/activation of a PUCCH directed (transmitted) to a secondary TRP (e.g., target TRP i+1 (/TO group i+1)) other than primary/default may be optional. That is, only when a base station schedules/configures/activates/indicates M-TRP PUCCH transmission to a terminal, additional configuration for a PUCCH directed to (transmitted) to a secondary TRP (e.g., target TRP i+1 (/TO group i+1)) may be selectively performed.

If an M-TRP PUCCH and/or repetition PUCCH according to the proposals (embodiments) 1 and 2 collide with another PUSCH or PUCCH, a terminal may prioritize the M-TRP PUCCH or/and repetition PUCCH transmission. In addition, when CORESETs in which different QCL type-D RSs are configured/activated collide in a time domain, a CORESET configured/indicated for M-TRP PUCCH transmission in options 1 to 3 of the proposal (embodiment) 1-1 above can prioritize (and the terminal gives up receiving other CORESETs). In addition, when PDCCH overbooking occurs by exceeding blind detection (BD)/control channel element (CCE) limit/capacity in a specific slot, an SS set configured/indicated for M-TRP PUCCH transmission in options 1 to 3 of the proposal (embodiment) 1-1 is prioritized and a terminal may skip monitoring of SSs (sets) having other lower priorities.

The (M-TRP) repetition PUCCH transmission method according to the proposal (embodiment) 1 and 2 can be applied/utilized even in (M-TRP) repetition PUSCH transmission and/or (M-TRP) SRS transmission. That is, by replacing a PUCCH with a PUSCH and/or an SRS in proposals (embodiments) 1 and 2 above, (M-TRP) repetition PUSCH transmission and/or (M-TRP) SRS transmission can be performed in the same manner.

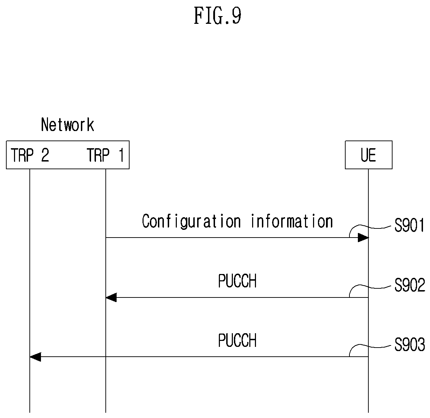

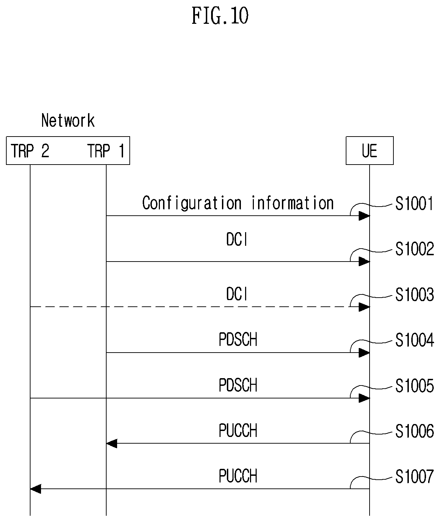

FIG. 9 and FIG. 10 illustrate a signaling procedure between a network and a terminal according to an embodiment of the present disclosure.

FIG. 9 and FIG. 10 to be described below exemplify signaling between a network (e.g., TRP 1, TRP 2) and a terminal (i.e., UE) in a situation of multiple TRPs (i.e., M-TRP, or multiple cells, hereinafter, all TRPs can be replaced with cells) to which the methods proposed in the present disclosure (e.g., at least one of options 1, 2, and 3 according to proposal (embodiment) 1-1, and options 1, 2, 3, 4, 5, and 6 according to proposal (embodiment) 1-2) can be applied.

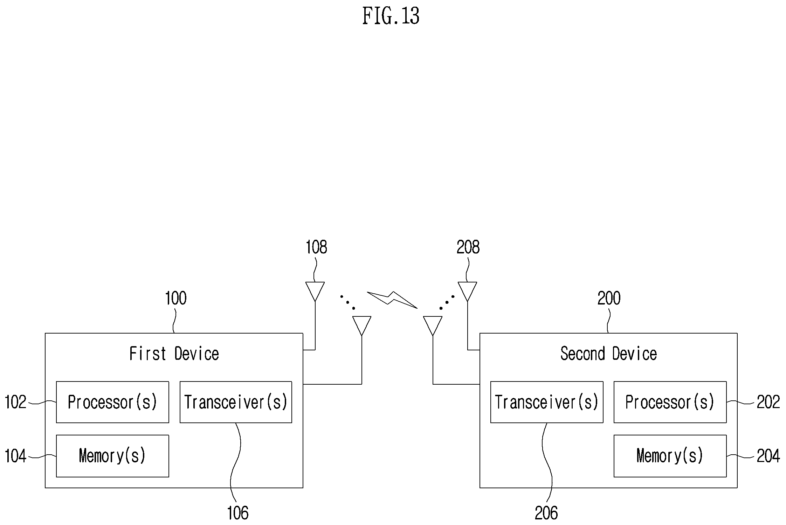

Here, a UE/Network is only an example, and may be applied to various devices as described in FIG. 13 to be described later. FIG. 9 and FIG. 10 are merely for convenience of description and do not limit the scope of the present disclosure. In addition, some step(s) shown in FIG. 9 and FIG. 10 may be omitted depending on circumstances and/or configurations.

In reference to FIG. 9 and FIG. 10, for convenience of a description, signaling between 2 TRPs and a UE is considered, but it goes without saying that a corresponding signaling method may be extended and applied to signaling between a plurality of TRPs and a plurality of UEs. In the following description, a network may be one base station including a plurality of TRPs or may be one cell including a plurality of TRPs. In an example, an ideal/a non-ideal backhaul may be configured between TRP 1 and TRP 2 configuring a network. In addition, the following description is described based on a plurality of TRPs, but it may be equally extended and applied to transmission through a plurality of panels. In addition, in the present disclosure, an operation that a terminal receives a signal from TRP1/TRP2 may be interpreted/described (or may be an operation) as an operation that a terminal receives a signal from a network (through/with TRP1/2) and an operation that a terminal transmits a signal to TRP1/TRP2 may be interpreted/described (or may be an operation) as an operation that a terminal transmits a signal to a network (through/with TRP1/TRP2) or may be conversely interpreted/described.

In addition, as described above, "TRP" is replaced with expressions such as a panel, an antenna array, a cell (e.g., macro cell / small cell/ pico cell, etc.), a TP (transmission point), a base station (base station, gNB, etc.) and can be applied. As described above, TRPs may be classified according to information (e.g., an index, an identifier (ID)) of a CORESET group (or CORESET pool). For example, when one terminal is configured to transmit/receive with multiple TRPs (or cells), this may mean that multiple CORESET groups (or CORESET pools) are configured for one terminal. Configuration of such a CORESET group (or CORESET pool) may be performed through higher layer signaling (e.g., RRC signaling, etc.). In addition, a base station may mean a generic term for an object that transmits and receives data with a terminal. For example, a base station may be a concept including one or more transmission points (TPs), one or more transmission and reception points (TRPs), etc. In addition, a TP and/or a TRP may include a panel of a base station, a transmission and reception unit, etc.

The operations of FIG. 9 and FIG. 10 are preferably applied when a PUCCH is transmitted in the lowest frequency range (e.g., FR1) among one or more frequency ranges defined in a wireless communication system, but the present disclosure is not limited thereto.

Referring to FIG. 9, a UE may receive configuration information from a network through/using TRP 1 (and/or TRP 2) (S901).

The configuration information may include information related to network configuration (i.e., TRP configuration) / resource information (resource allocation) related to transmission and reception based on multiple TRPs, etc. Here, the configuration information may be transmitted through higher layer signaling (e.g., RRC signaling, MAC CE, etc.). In addition, when the configuration information is predefined or preconfigured, the corresponding step may be omitted.

For example, the configuration information may be configuration information related to transmission of a PUCCH (e.g., M-TRP transmission of A/N PUCCH, CSI reporting PUCCH, SR PUCCH, SPS A/N PUCCH, BFR PUCCH) described in the above-described proposed method (e.g., at least one of options 1, 2, and 3 according to proposal (embodiment) 1-1, and options 1, 2, 3, 4, 5, and 6 according to proposal (embodiment) 1-2).

Specifically, the configuration information may be based on configuration information (e.g., higher layer IE for PUCCH configuration (PUCCH-config IE)/higher layer IE for PUCCH power control (pucch-PowerControl IE)) according to options 1 to 3 (particularly option 1) of the proposal (embodiment) 1-1 and/or options 1 to 6 (particularly option 1, 2 and 4) of the proposal (embodiment) 1-2.

Here, the configuration information may include information related to repeated PUCCH transmission (e.g., information on whether or not a PUCCH is repeatedly transmitted and/or information on the number of repetitions of PUCCH, etc.) at a plurality of transmission occasions (TO). In addition, information related to PUCCH transmission for M-TRP (i.e., information for specifying a TRP, mapping information between a plurality of transmission occasions (TOs) at which PUCCH is repeatedly transmitted and TO groups corresponding to/associated with each TRP, etc.) may be included. Here, each TO group may include one or more TOs. Mapping information between a plurality of transmission occasions (TOs) and TO groups corresponding to/associated with each TRP may explicitly specify one or more TOs mapped to a TO group corresponding/associated with each TRP. Alternatively, mapping information between a plurality of transmission occasions (TOs) and TO groups corresponding to/associated with each TRP includes only specific pattern information, and a plurality of transmission occasions (TOs) and a TO group corresponding to/associated with each TRP may be implicitly mapped according to corresponding pattern information. For example, a plurality of TOs in which PUCCH is repeatedly transmitted may be cyclically mapped to each TO group in units of two TOs (Here, 'two TO units' is for convenience of description, and the present disclosure is not limited thereto. Therefore, the two TO units can be interpreted as the number of a plurality of TOs (i.e., repetition number) divided by N units (here, N is the number of TO groups, N is a natural number).). Alternatively, a plurality of TOs on which PUCCHs are repeatedly transmitted may be cyclically mapped to N TO groups in units of one TO.

More specifically, for example, the configuration information may include, according to option 1 of the proposal (embodiment) 1-1, at least one of i) a specific CORESET (group) ID (e.g. CORESET ID, CORESET pool index) and search space set (SS set) ID, ii) a plurality of power control parameters for M-TRP PUCCH transmission based on a single PUCCH resource (e.g., an identifier of power (P0) configured by a base station (p0-PUCCH-Id) / an identifier of pathloss reference RS of a PUCCH (pucch-PathlossReferenceRS-Id) / a closed-loop index), iii) association information between each PUCCH resource and a plurality of power control parameters (e.g., an identifier of power (P0) configured by a base station (p0-PUCCH-Id) / an identifier of pathloss reference RS of a PUCCH (pucch-PathlossReferenceRS-Id) / a closed-loop index), or vi) information (e.g., indication/configuration indicating on/off (enable/disable) of an M-TRP PUCCH or a condition related thereto) related to enabling (i.e., activation of repeated transmission of a PUCCH in a plurality of TOs grouped into N TO groups) of an M-TRP PUCCH.

As described above, association information (including association information) between each PUCCH resource and a plurality of power control parameter sets (e.g., an identifier of power (P0) configured by a base station (p0-PUCCH-Id) / an identifier of pathloss reference RS of a PUCCH (pucch-PathlossReferenceRS-Id) / a closed-loop index) may be associated with a plurality of TO groups. That is, in the case of M-TRP transmission for N TRPs based on a single PUCCH resource, the configuration information may include information on N power control parameter sets for the single PUCCH resource. Each of power control parameter sets may be independently configured (i.e., some power control parameters in different power parameter sets may have the same value), or entire power control parameters may be divided into N groups and configured (i.e., the same power control parameter values are not configured for different power parameter sets).

Here, even if an explicit association relationship is not configured by the configuration information, the N TO groups (i.e., corresponding to N TRPs) and the N power control parameter sets may be mapped one-to-one in the form of ordered pairs based on the same index. Alternatively, association relationship between the N TO groups (i.e., corresponding to the N TRPs) and the N power control parameter sets may be explicitly configuration by the configuration information.

For example, the configuration information may include information related to a PUCCH resource for M-TRP PUCCH transmission according to option 1 of the proposal (embodiment) 1-1. Here, the PUCCH resource for the M-TRP PUCCH transmission may be a single PUCCH resource in which spatial relationship information (PUCCH-SpatialRelationInfo) is not configured/activated. In addition, the PUCCH resource for the M-TRP PUCCH transmission may be based on different PUCCH resource(s) for which PUCCH spatial relationship information (PUCCH-SpatialRelationInfo) is not configured/activated. In this case, the configuration information may include information (i.e., pairing/grouping information) related to the different PUCCH resource(s). The information related to the different PUCCH resource(s) may include i) information explicitly indicating (for specifying) the PUCCH resource (e.g., specific codepoint(s) among codepoints of a PRI field) and/or ii) information implicitly indicating (for specifying) the PUCCH resource (e.g., i-th PUCCH resource in each PUCCH resource group/ PUCCH resource grouping information according to a specific criterion) .

Alternatively, spatial relationship information (PUCCH-SpatialRelationInfo) may be configured for each of the different PUCCH resource(s) for the M-TRP PUCCH transmission, and power of a PUSCH transmitted in a TO group (i.e., TRP) corresponding to each PUCCH resource may be determined by a power control parameter set (e.g., a power control parameter set includes association information for an identifier of power (P0) configured by a base station (p0-PUCCH-Id) / an identifier of pathloss reference RS of a PUCCH (pucch-PathlossReferenceRS-Id) / a closed-loop index) in spatial relation information (PUCCH-SpatialRelationInfo) for the corresponding PUCCH resource.

In addition, for example, the configuration information may include PUCCH repetition information for each PUCCH format according to option 1 of the proposal (embodiment) 1-2. In addition, for example, the configuration information may include PUCCH repetition information for each PUCCH resource according to option 2 of the proposal (embodiment) 1-2. In addition, for example, the configuration information may include CORESET/SS set information related to PUCCH repetition according to option 4 of the proposal (embodiment) 1-2.

In addition, the configuration information may include PUCCH repetition information (i.e., information on whether PUCCH repetition are transmitted or not and/or information on the number of PUCCH repetitions) and/or information related to M-TRP transmission (information indicating S-TRP/M-TRP switching, or M-TRP activation indication). In other words, the configuration information may include information for activating repeated transmission of the PUCCH (i.e., M-TRP transmission of PUCCH) in the plurality of TOs based on the N TO groups. In addition, the corresponding information may be transmitted through MAC CE or updated/activated.

A UE transmits a PUCCH to a network through/using TRP 1 (and/or TRP 2) (S902, S903).

Here, the PUCCH may be transmitted according to the above-described proposed method (e.g., at least one of options 1, 2, and 3 according to proposal (embodiment) 1-1, and options 1, 2, 3, 4, 5, and 6 according to proposal (embodiment) 1-2).

The PUCCH may be repeatedly transmitted at a plurality of transmission occasions (TO) for the one PUCCH resource. In addition, the plurality of TOs may be mapped/grouped into N (N is a natural number) TO groups (i.e., N TRPs). Each TO group (i.e., each TRP) may include one or more TOs. As a result, a PUCCH is repeatedly transmitted to each TRP in a plurality of TOs, and a TO group to which a PUCCH is transmitted can be grouped/configured for each TRP. In addition, N power control parameter sets may be configured for a corresponding PUCCH resource, and the N TO groups (i.e., N TRPs) may be associated with N power control parameter sets in configuration information related to the PUCCH. Transmission power of a PUCCH may be determined based on association information between different (independent) power control parameter sets (e.g., an identifier of power (P0) configured by a base station (p0-PUCCH-Id) / an identifier of pathloss reference RS of a PUCCH (pucch-PathlossReferenceRS-Id) / a closed-loop index) for each TRP. That is, transmission power of a PUCCH may be determined based on a power control parameter set associated with a TO group in which the PUCCH is transmitted.

In addition, the PUCCH may be repeatedly transmitted in a plurality of TOs for different PUCCH resources. In this case, each PUCCH resource may be mapped/corresponded to different TRPs and mapped/corresponded to different TO groups. Transmission power of a PUCCH may be determined based on a power control parameter set configured for each PUCCH resource. That is, transmission power of a PUCCH may be determined based on a power control parameter set associated with a TO group (i.e., PUCCH resource) through which the PUCCH is transmitted.

For example, the PUCCH may be transmitted with transmission power configured by the configuration information. Specifically, a PUCCH for each TRP may be transmitted with transmission power based on any one of the plurality of power control parameter sets (e.g., a power control parameter set includes association information for an identifier of power (P0) configured by a base station (p0-PUCCH-Id) / an identifier of pathloss reference RS of a PUCCH (pucch-PathlossReferenceRS-Id) / a closed-loop index) in spatial relation information (PUCCH-SpatialRelationInfo). Here, among the plurality of power control parameters, a parameter applied to a PUCCH for each TRP may be determined based on a separate indication (e.g., the DCI) from a base station or configuration (e.g., the configuration information).

For example, the PUCCH may be transmitted when an M-TRP PUCCH is enabled/activated by the configuration information.

For example, the PUCCH may be transmitted through different PUCCH resource(s) in which spatial relationship information (PUCCH-SpatialRelationInfo) of the PUCCH is not configured/activated. The different PUCCH resource(s) may be based on PUCCH resource(s) explicitly or implicitly indicated through the configuration information.

For example, the PUCCH may be transmitted through different PUCCH resource(s) in which spatial relationship information (PUCCH-SpatialRelationInfo) is configured/activated. Here, the PUCCH may be transmitted based on beams (i.e., reference RSs) related to the different PUCCH resources. The beams (i.e., reference RSs) related to the different PUCCH resources may be determined based on transmission beam information of spatial relationship information (PUCCH-SpatialRelationInfo) configured/activated for each PUCCH resource. The PUCCH may be transmitted with transmission power based on power control information of spatial relationship information (PUCCH-SpatialRelationInfo) configured/activated for each PUCCH resource.

Referring to FIG. 10, signaling when a UE receives single DCI in an M-TRP (or cell, hereinafter all TRP can be replaced by cell/panel, or even if multiple CORESET (/CORESET group) is configured from one TRP, it can be assumed to be M-TRP) situation (i.e., when one TRP transmits DCI to a UE) is exemplified. In FIG. 10, for convenience of description, it is assumed that TRP1 transmits DCI as a representative. FIG. 10 is only an example for convenience of description and does not limit the technical scope of the present disclosure.

Referring to FIG. 10, a UE may receive configuration information from a network through/using TRP 1 (and/or TRP 2) (S1001).

The configuration information may include information related to network configuration (i.e., TRP configuration) / resource information (resource allocation) related to transmission and reception based on multiple TRPs, etc. Here, the configuration information may be transmitted through higher layer signaling (e.g., RRC signaling, MAC CE, etc.). In addition, when the configuration information is predefined or preconfigured, the corresponding step may be omitted.

For example, the configuration information may be configuration information related to transmission of a PUCCH (e.g., M-TRP transmission of A/N PUCCH, CSI reporting PUCCH, SR PUCCH, SPS A/N PUCCH, BFR PUCCH) described in the above-described proposed method (e.g., at least one of options 1, 2, and 3 according to proposal (embodiment) 1-1, and options 1, 2, 3, 4, 5, and 6 according to proposal (embodiment) 1-2).

Specifically, the configuration information may be based on configuration information (e.g., higher layer IE for PUCCH configuration (PUCCH-config IE)/higher layer IE for PUCCH power control (pucch-PowerControl IE)) according to options 1 to 3 (particularly option 1) of the proposal (embodiment) 1-1 and/or options 1 to 6 (particularly option 1, 2 and 4) of the proposal (embodiment) 1-2.

Here, the configuration information may include information related to repeated PUCCH transmission (e.g., information on whether or not a PUCCH is repeatedly transmitted and/or information on the number of repetitions of PUCCH, etc.) at a plurality of transmission occasions (TO). In addition, information related to PUCCH transmission for M-TRP (i.e., information for specifying a TRP, mapping information between a plurality of transmission occasions (TOs) at which PUCCH is repeatedly transmitted and TO groups corresponding to/associated with each TRP, etc.) may be included. Here, each TO group may include one or more TOs. Mapping information between a plurality of transmission occasions (TOs) and TO groups corresponding to/associated with each TRP may explicitly specify one or more TOs mapped to a TO group corresponding/associated with each TRP. Alternatively, mapping information between a plurality of transmission occasions (TOs) and TO groups corresponding to/associated with each TRP includes only specific pattern information, and a plurality of transmission occasions (TOs) and a TO group corresponding to/associated with each TRP may be implicitly mapped according to corresponding pattern information. For example, a plurality of TOs in which PUCCH is repeatedly transmitted may be cyclically mapped to each TO group in units of two TOs (Here, 'two TO units' is for convenience of description, and the present disclosure is not limited thereto. Therefore, the two TO units can be interpreted as the number of a plurality of TOs (i.e., repetition number) divided by N units (here, N is the number of TO groups, N is a natural number).). Alternatively, a plurality of TOs on which PUCCHs are repeatedly transmitted may be cyclically mapped to N TO groups in units of one TO.

More specifically, for example, the configuration information may include, according to option 1 of the proposal (embodiment) 1-1, at least one of i) a specific CORESET (group) ID (e.g. CORESET ID, CORESET pool index) and search space set (SS set) ID, ii) a plurality of power control parameters for M-TRP PUCCH transmission based on a single PUCCH resource (e.g., an identifier of power (P0) configured by a base station (p0-PUCCH-Id) / an identifier of pathloss reference RS of a PUCCH (pucch-PathlossReferenceRS-Id) / a closed-loop index), iii) association information between each PUCCH resource and a plurality of power control parameters (e.g., an identifier of power (P0) configured by a base station (p0-PUCCH-Id) / an identifier of pathloss reference RS of a PUCCH (pucch-PathlossReferenceRS-Id) / a closed-loop index), or vi) information (e.g., indication/configuration indicating on/off (enable/disable) of an M-TRP PUCCH or a condition related thereto) related to enabling (i.e., activation of repeated transmission of a PUCCH in a plurality of TOs grouped into N TO groups) of an M-TRP PUCCH. Here, the single PUCCH resource may mean a PUCCH resource(s) indicated by a PRI field of DL grant DCI received through a CORESET/SS set corresponding to the specific CORESET (group) ID (e.g., CORESET ID, CORESET pool index) and/or search space set (SS set) ID.

As described above, association information (including association information) between each PUCCH resource and a plurality of power control parameter sets (e.g., an identifier of power (P0) configured by a base station (p0-PUCCH-Id) / an identifier of pathloss reference RS of a PUCCH (pucch-PathlossReferenceRS-Id) / a closed-loop index) may be associated with a plurality of TO groups. That is, in the case of M-TRP transmission for N TRPs based on a single PUCCH resource, the configuration information may include information on N power control parameter sets for the single PUCCH resource. Each of power control parameter sets may be independently configured (i.e., some power control parameters in different power parameter sets may have the same value), or entire power control parameters may be divided into N groups and configured (i.e., the same power control parameter values are not configured for different power parameter sets).

Here, even if an explicit association relationship is not configured by the configuration information, the N TO groups (i.e., corresponding to N TRPs) and the N power control parameter sets may be mapped one-to-one in the form of ordered pairs based on the same index. Alternatively, association relationship between the N TO groups (i.e., corresponding to the N TRPs) and the N power control parameter sets may be explicitly configuration by the configuration information.

For example, the configuration information may include information related to a PUCCH resource for M-TRP PUCCH transmission according to option 1 of the proposal (embodiment) 1-1. Here, the PUCCH resource for the M-TRP PUCCH transmission may be a single PUCCH resource in which spatial relationship information (PUCCH-SpatialRelationInfo) is not configured/activated. In addition, the PUCCH resource for the M-TRP PUCCH transmission may be based on different PUCCH resource(s) for which PUCCH spatial relationship information (PUCCH-SpatialRelationInfo) is not configured/activated. In this case, the configuration information may include information (i.e., pairing/grouping information) related to the different PUCCH resource(s). The information related to the different PUCCH resource(s) may include i) information explicitly indicating (for specifying) the PUCCH resource (e.g., specific codepoint(s) among codepoints of a PRI field) and/or ii) information implicitly indicating (for specifying) the PUCCH resource (e.g., i-th PUCCH resource in each PUCCH resource group/ PUCCH resource grouping information according to a specific criterion) .

Alternatively, spatial relationship information (PUCCH-SpatialRelationInfo) may be configured for each of the different PUCCH resource(s) for the M-TRP PUCCH transmission, and power of a PUSCH transmitted in a TO group (i.e., TRP) corresponding to each PUCCH resource may be determined by a power control parameter set (e.g., a power control parameter set includes association information for an identifier of power (P0) configured by a base station (p0-PUCCH-Id) / an identifier of pathloss reference RS of a PUCCH (pucch-PathlossReferenceRS-Id) / a closed-loop index) in spatial relation information (PUCCH-SpatialRelationInfo) for the corresponding PUCCH resource.

In addition, for example, the configuration information may include PUCCH repetition information for each PUCCH format according to option 1 of the proposal (embodiment) 1-2. In addition, for example, the configuration information may include PUCCH repetition information for each PUCCH resource according to option 2 of the proposal (embodiment) 1-2. In addition, for example, the configuration information may include CORESET/SS set information related to PUCCH repetition according to option 4 of the proposal (embodiment) 1-2.

In addition, the configuration information may include PUCCH repetition information (i.e., information on whether PUCCH repetition are transmitted or not and/or information on the number of PUCCH repetitions) and/or information related to M-TRP transmission (information indicating S-TRP/M-TRP switching, or M-TRP activation indication). In other words, the configuration information may include information for activating repeated transmission of the PUCCH (i.e., M-TRP transmission of PUCCH) in the plurality of TOs based on the N TO groups. In addition, the corresponding information may be transmitted through MAC CE or updated/activated.

A UE may receive DCI from a network through/using TRP 1 (and/or TRP 2) (S1002, S1003). DCI may be transmitted on (through) a PDCCH. The DCI may be DL grant DCI for scheduling a PDSCH. If a PDSCH is a single DCI-based PDSCH, a UE may receive DCI from TRP 1 (or TRP 2) from a network (S1002). If the PDSCH is a multiple DCI-based PDSCH, a UE may receive respective DCI from a network through TRP 1 and TRP 2 (S1003).

Here, the DCI may be transmitted based on a specific CORESET (group) ID or/and SS set ID configured according to proposal (embodiment) 1-1 and proposal (embodiment) 1-2. That is, DCI (or PDCCH carrying DCI) can be monitored/received in a specific CORESET (group) ID or/and SS set ID.

More specifically, for example, when DCI (or PDCCH carrying DCI) is monitored/received in a specific CORESET (group) ID or/and SS set ID configured by configuration information according to option 1 of the proposal (embodiment) 1-1, repeated transmission (i.e., M-TRP transmission of a PUCCH) in the plurality of TOs of the PUCCH based on the N TO groups may be implicitly indicated. The PUCCH may be repeatedly transmitted in a PUCCH resource indicated by a DCI associated with a plurality of TRPs.

In addition, for example, the DCI may include a PRI field according to option 2 of the proposal (embodiment) 1-1. PUCCH resources may be mapped to the PRI field (i.e., codepoints of the PRI field). A plurality of pieces of spatial relationship information (e.g., i PUCCH-SpatialRelationInfo) may be configured for each PUCCH resource among the mapped PUCCH resources.

In addition, for example, the DCI may include information indicating PDSCH repetition according to option 3 of the proposal (embodiment) 1-2. Based on the PUCCH being related to a plurality of TRPs, a PUCCH related to a specific TRP among the plurality of TRPs may be transmitted based on a default configuration (e.g., basic power control configuration/basic Tx beam configuration).

In addition, for example, the DCI may include information indicating PDSCH repetition according to option 3 of the proposal (embodiment) 1-2, and repeated transmission of the PUCCH may be configured based on repetition information of the PDSCH.

In addition, for example, for the DCI, repeated transmission of the PUCCH may be configured for based on a CORESET (group) ID or/and SS set ID related to PDCCH repetition according to option 4 of the proposal (embodiment) 1-2.

In addition, for example, according to option 5 of the proposal (embodiment) 1-2, a PDSCH TDRA field of the DCI may include information related to A/N PUCCH repetition. The information related to the repetition of the A/N PUCCH may indicate the number of repetitions and repetition on/off based on joint encoding.

Also, for example, according to option 6 of the proposal (embodiment) 1-2, the PRI field of the DCI may indicate information related to A/N PUCCH repetition. Specifically, the PRI field may indicate the number of repetitions and repetition on/off based on joint encoding.

A UE receives a PDSCH through/using TRP 1 (and/or TRP 2) from the network (S1004, S1005). If the PDSCH is a single DCI-based PDSCH, a UE may receive, from TRP 1 and TRP 2, PDSCHs scheduled by DCI received from TRP 1, respectively (S1004, S1005). Alternatively, when the PDSCH is a multiple DCI-based PDSCH, a UE may receive, from TRP 1 and TRP 2, PDSCHs each scheduled by respective DCI received from TRP 1/TRP 2 (S1004, S1005).

A UE transmits a PUCCH through/using TRP 1 (and/or TRP 2) to a network (S1006, S1007). The PUCCH may be a PUCCH related to HARQ-ACK information (ACK/NACK) for the PDSCH.

Here, the PUCCH may be transmitted according to the above-described proposed method (e.g., at least one of options 1, 2, and 3 according to proposal (embodiment) 1-1, and options 1, 2, 3, 4, 5, and 6 according to proposal (embodiment) 1-2).

The PUCCH may be repeatedly transmitted at a plurality of transmission occasions (TO) for the one PUCCH resource. In addition, the plurality of TOs may be mapped/grouped into N (N is a natural number) TO groups (i.e., N TRPs). Each TO group (i.e., each TRP) may include one or more TOs. As a result, a PUCCH is repeatedly transmitted to each TRP in a plurality of TOs, and a TO group to which a PUCCH is transmitted can be grouped/configured for each TRP. In addition, N power control parameter sets may be configured for a corresponding PUCCH resource, and the N TO groups (i.e., N TRPs) may be associated with N power control parameter sets in configuration information related to the PUCCH. Transmission power of a PUCCH may be determined based on association information between different (independent) power control parameter sets (e.g., an identifier of power (P0) configured by a base station (p0-PUCCH-Id) / an identifier of pathloss reference RS of a PUCCH (pucch-PathlossReferenceRS-Id) / a closed-loop index) for each TRP. That is, transmission power of a PUCCH may be determined based on a power control parameter set associated with a TO group in which the PUCCH is transmitted.

In addition, the PUCCH may be repeatedly transmitted in a plurality of TOs for different PUCCH resources. In this case, each PUCCH resource may be mapped/corresponded to different TRPs and mapped/corresponded to different TO groups. Transmission power of a PUCCH may be determined based on a power control parameter set configured for each PUCCH resource. That is, transmission power of a PUCCH may be determined based on a power control parameter set associated with a TO group (i.e., PUCCH resource) through which the PUCCH is transmitted.

More specifically, the PUCCH may be transmitted as follows according to option 1 of the proposal (embodiment) 1-1. For example, when the DCI is related to the CORESET/SS configured based on the configuration information, the PUCCH may be transmitted to each TRP (1/2) through a PUCCH resource indicated by the PRI field of the DCI.

For example, the PUCCH may be transmitted with transmission power configured by the configuration information. Specifically, a PUCCH for each TRP may be transmitted with transmission power based on any one of the plurality of power control parameter sets (e.g., a power control parameter set includes association information for an identifier of power (P0) configured by a base station (p0-PUCCH-Id) / an identifier of pathloss reference RS of a PUCCH (pucch-PathlossReferenceRS-Id) / a closed-loop index) in spatial relation information (PUCCH-SpatialRelationInfo). Here, among the plurality of power control parameters, a parameter applied to a PUCCH for each TRP may be determined based on a separate indication (e.g., the DCI) from a base station or configuration (e.g., the configuration information).

For example, the PUCCH may be transmitted when an M-TRP PUCCH is enabled/activated by the configuration information.

For example, the PUCCH may be transmitted through different PUCCH resource(s) in which spatial relationship information (PUCCH-SpatialRelationInfo) of the PUCCH is not configured/activated. The different PUCCH resource(s) may be based on PUCCH resource(s) explicitly or implicitly indicated through the configuration information.

For example, the PUCCH may be transmitted through different PUCCH resource(s) in which spatial relationship information (PUCCH-SpatialRelationInfo) is configured/activated. Here, the PUCCH may be transmitted based on beams (i.e., reference RSs) related to the different PUCCH resources. The beams (i.e., reference RSs) related to the different PUCCH resources may be determined based on transmission beam information of spatial relationship information (PUCCH-SpatialRelationInfo) configured/activated for each PUCCH resource. The PUCCH may be transmitted with transmission power based on power control information of spatial relationship information (PUCCH-SpatialRelationInfo) configured/activated for each PUCCH resource.

In addition, the PUCCH may be transmitted as follows according to option 2 of the proposal (embodiment) 1-1. For example, the PRI field of the DCI may indicate a PUCCH resource in which a plurality of pieces of spatial relationship information (e.g., two PUCCH-SpatialRelationInfo) are configured. The (A/N) PUCCH may be transmitted through a PUCCH resource configured with the plurality of pieces of spatial relationship information (e.g., two PUCCH-SpatialRelationInfo) are configured.

In addition, the PUCCH may be transmitted as follows according to option 3 of the proposal (embodiment) 1-1. For example, the PRI field of the DCI may indicate a PUCCH resource for which spatial relationship information is not configured/activated. The PUCCH may be transmitted based on a default configuration (e.g., default power control configuration and/or default Tx beam configuration). Specifically, the (A/N) PUCCH may be transmitted with transmission power based on default PC parameter(s). The PUCCH may be transmitted based on a default Tx beam.

In addition, the PUCCH may be transmitted as follows according to option 3 of the proposal (embodiment) 1-2. For example, the DCI may include information indicating PDSCH repetition. Here, (A/N) PUCCH may be repeatedly transmitted based on information indicating the PDSCH repetition.

In addition, the PUCCH may be transmitted as follows according to option 4 of the proposal (embodiment) 1-2. For example, the PUCCH may be transmitted based on a CORESET (group) ID or/and SS set ID related to PDCCH repetition. Here, the PUCCH may be repeatedly transmitted. Information related to repeated transmission of the (A/N) PUCCH may be configured separately or may be based on configuration information for repetition of the PDCCH.

In addition, the PUCCH may be transmitted as follows according to option 5 of the proposal (embodiment) 1-2. For example, the PDSCH TDRA field of the DCI may include information related to A/N PUCCH repetition. The information related to the repetition of the A/N PUCCH may indicate the number of repetitions and repetition on/off based on joint encoding. Here, the PUCCH may be repeatedly transmitted according to information related to the repetition of the PUCCH.

The PUCCH may be transmitted as follows according to option 6 of the proposal 1-2. For example, the PRI field of the DCI may indicate information related to A/N PUCCH repetition. Specifically, the PRI field may indicate the number of repetitions and repetition on/off based on joint encoding. Here, the PUCCH may be repeatedly transmitted according to information related to the repetition of the A/N PUCCH.

The terminal/base station operation illustrated in FIG. 9 and FIG. 10 is only an example, each operation (to step) is not necessarily, and operations related to M-TRP PUCCH transmission according to the above-described embodiments may be omitted or added according to a terminal/base station implementation method. For example, when the PUCCH is a CSI reporting PUCCH, steps S1002, S1003, S1004, and S1005 in FIG. 10 may be omitted and a CSI-RS receiving (transmitting) step may be added.

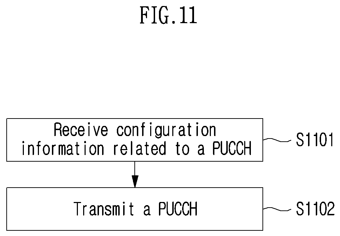

FIG. 11 illustrates an operation of a terminal for transmitting and receiving a PUCCH according to an embodiment of the present disclosure.

FIG. 11 illustrates an operation of a terminal based on the previously proposed method (e.g., at least one of options 1, 2, and 3 according to proposal (embodiment) 1-1, and options 1, 2, 3, 4, 5, and 6 according to proposal (embodiment) 1-2). The example of FIG. 11 is for convenience of description and does not limit the scope of the present disclosure. Some step(s) illustrated in FIG. 11 may be omitted depending on circumstances and/or configurations. In addition, the terminal in FIG. 11 is only one example, and may be implemented as a device illustrated in FIG. 13 below. For example, the processor (102/202) of FIG. 13 may control to transmit or receive channels/signals/data/information, etc. using the transceiver (106/206), and may control to store transmitted/received channels/signals/data/information, etc. in the memory (104/204).

Additionally, the operation of FIG. 11 may be processed by one or more processors (102, 202) of FIG. 13. In addition, the operation of FIG. 11 may be stored in a memory (e.g., one or more memories (104, 204) of FIG. 13) in the form of a command/program (e.g., instructions, executable code) for driving at least one processor (e.g., 102, 202) of FIG. 13.

Referring to FIG. 11, for convenience of explanation, the operation of a terminal for one base station (i.e., one TRP) is considered, but the operation of a terminal can be extended and applied to an operation between multiple TRPs as well.

The operations of FIG. 11 are preferably applied when a PUCCH is transmitted in the lowest frequency range (e.g., FR1) among one or more frequency ranges defined in a wireless communication system, but the present disclosure is not limited thereto.

Referring to FIG. 11, a terminal receives configuration information related to a PUCCH from a base station (S1101).

The configuration information may be configuration information related to transmission of a PUCCH (e.g., M-TRP transmission of A/N PUCCH, CSI reporting PUCCH, SR PUCCH, SPS A/N PUCCH, BFR PUCCH) described in the above-described proposed method (e.g., at least one of options 1, 2, and 3 according to proposal (embodiment) 1-1, and options 1, 2, 3, 4, 5, and 6 according to proposal (embodiment) 1-2).

Specifically, the configuration information may be based on configuration information (e.g., higher layer IE for PUCCH configuration (PUCCH-config IE)/higher layer IE for PUCCH power control (pucch-PowerControl IE)) according to options 1 to 3 (particularly option 1) of the proposal (embodiment) 1-1 and/or options 1 to 6 (particularly option 1, 2 and 4) of the proposal (embodiment) 1-2.

Here, the configuration information may include information related to repeated PUCCH transmission (e.g., information on whether or not a PUCCH is repeatedly transmitted and/or information on the number of repetitions of PUCCH, etc.) at a plurality of transmission occasions (TO). In addition, information related to PUCCH transmission for M-TRP (i.e., information for specifying a TRP, mapping information between a plurality of transmission occasions (TOs) at which PUCCH is repeatedly transmitted and TO groups corresponding to/associated with each TRP, etc.) may be included. Here, each TO group may include one or more TOs. Mapping information between a plurality of transmission occasions (TOs) and TO groups corresponding to/associated with each TRP may explicitly specify one or more TOs mapped to a TO group corresponding/associated with each TRP. Alternatively, mapping information between a plurality of transmission occasions (TOs) and TO groups corresponding to/associated with each TRP includes only specific pattern information, and a plurality of transmission occasions (TOs) and a TO group corresponding to/associated with each TRP may be implicitly mapped according to corresponding pattern information. For example, a plurality of TOs in which PUCCH is repeatedly transmitted may be cyclically mapped to each TO group in units of two TOs (Here, 'two TO units' is for convenience of description, and the present disclosure is not limited thereto. Therefore, the two TO units can be interpreted as the number of a plurality of TOs (i.e., repetition number) divided by N units (here, N is the number of TO groups, N is a natural number).). Alternatively, a plurality of TOs on which PUCCHs are repeatedly transmitted may be cyclically mapped to N TO groups in units of one TO.

More specifically, for example, the configuration information may include, according to option 1 of the proposal (embodiment) 1-1, at least one of i) a specific CORESET (group) ID (e.g. CORESET ID, CORESET pool index) and search space set (SS set) ID, ii) a plurality of power control parameters for M-TRP PUCCH transmission based on a single PUCCH resource (e.g., an identifier of power (P0) configured by a base station (p0-PUCCH-Id) / an identifier of pathloss reference RS of a PUCCH (pucch-PathlossReferenceRS-Id) / a closed-loop index), iii) association information between each PUCCH resource and a plurality of power control parameters (e.g., an identifier of power (P0) configured by a base station (p0-PUCCH-Id) / an identifier of pathloss reference RS of a PUCCH (pucch-PathlossReferenceRS-Id) / a closed-loop index), or vi) information (e.g., indication/configuration indicating on/off (enable/disable) of an M-TRP PUCCH or a condition related thereto) related to enabling (i.e., activation of repeated transmission of a PUCCH in a plurality of TOs grouped into N TO groups) of an M-TRP PUCCH.

As described above, association information (including association information) between each PUCCH resource and a plurality of power control parameter sets (e.g., an identifier of power (P0) configured by a base station (p0-PUCCH-Id) / an identifier of pathloss reference RS of a PUCCH (pucch-PathlossReferenceRS-Id) / a closed-loop index) may be associated with a plurality of TO groups. That is, in the case of M-TRP transmission for N TRPs based on a single PUCCH resource, the configuration information may include information on N power control parameter sets for the single PUCCH resource. Each of power control parameter sets may be independently configured (i.e., some power control parameters in different power parameter sets may have the same value), or entire power control parameters may be divided into N groups and configured (i.e., the same power control parameter values are not configured for different power parameter sets).

Here, even if an explicit association relationship is not configured by the configuration information, the N TO groups (i.e., corresponding to N TRPs) and the N power control parameter sets may be mapped one-to-one in the form of ordered pairs based on the same index. Alternatively, association relationship between the N TO groups (i.e., corresponding to the N TRPs) and the N power control parameter sets may be explicitly configuration by the configuration information.

For example, the configuration information may include information related to a PUCCH resource for M-TRP PUCCH transmission according to option 1 of the proposal (embodiment) 1-1. Here, the PUCCH resource for the M-TRP PUCCH transmission may be a single PUCCH resource in which spatial relationship information (PUCCH-SpatialRelationInfo) is not configured/activated. In addition, the PUCCH resource for the M-TRP PUCCH transmission may be based on different PUCCH resource(s) for which PUCCH spatial relationship information (PUCCH-SpatialRelationInfo) is not configured/activated. In this case, the configuration information may include information (i.e., pairing/grouping information) related to the different PUCCH resource(s). The information related to the different PUCCH resource(s) may include i) information explicitly indicating (for specifying) the PUCCH resource (e.g., specific codepoint(s) among codepoints of a PRI field) and/or ii) information implicitly indicating (for specifying) the PUCCH resource (e.g., i-th PUCCH resource in each PUCCH resource group/ PUCCH resource grouping information according to a specific criterion) .

Alternatively, spatial relationship information (PUCCH-SpatialRelationInfo) may be configured for each of the different PUCCH resource(s) for the M-TRP PUCCH transmission, and power of a PUSCH transmitted in a TO group (i.e., TRP) corresponding to each PUCCH resource may be determined by a power control parameter set (e.g., a power control parameter set includes association information for an identifier of power (P0) configured by a base station (p0-PUCCH-Id) / an identifier of pathloss reference RS of a PUCCH (pucch-PathlossReferenceRS-Id) / a closed-loop index) in spatial relation information (PUCCH-SpatialRelationInfo) for the corresponding PUCCH resource.

In addition, for example, the configuration information may include PUCCH repetition information for each PUCCH format according to option 1 of the proposal (embodiment) 1-2. In addition, for example, the configuration information may include PUCCH repetition information for each PUCCH resource according to option 2 of the proposal (embodiment) 1-2. In addition, for example, the configuration information may include CORESET/SS set information related to PUCCH repetition according to option 4 of the proposal (embodiment) 1-2.

In addition, the configuration information may include PUCCH repetition information (i.e., information on whether PUCCH repetition are transmitted or not and/or information on the number of PUCCH repetitions) and/or information related to M-TRP transmission (information indicating S-TRP/M-TRP switching, or M-TRP activation indication). In other words, the configuration information may include information for activating repeated transmission of the PUCCH (i.e., M-TRP transmission of PUCCH) in the plurality of TOs based on the N TO groups. In addition, the corresponding information may be transmitted through MAC CE or updated/activated.

A terminal transmits a PUCCH to a base station (S1102).

Here, the PUCCH may be transmitted according to the above-described proposed method (e.g., at least one of options 1, 2, and 3 according to proposal (embodiment) 1-1, and options 1, 2, 3, 4, 5, and 6 according to proposal (embodiment) 1-2).

The PUCCH may be repeatedly transmitted at a plurality of transmission occasions (TO) for the one PUCCH resource. In addition, the plurality of TOs may be mapped/grouped into N (N is a natural number) TO groups (i.e., N TRPs). Each TO group (i.e., each TRP) may include one or more TOs. As a result, a PUCCH is repeatedly transmitted to each TRP in a plurality of TOs, and a TO group to which a PUCCH is transmitted can be grouped/configured for each TRP. In addition, N power control parameter sets may be configured for a corresponding PUCCH resource, and the N TO groups (i.e., N TRPs) may be associated with N power control parameter sets in configuration information related to the PUCCH. Transmission power of a PUCCH may be determined based on association information between different (independent) power control parameter sets (e.g., an identifier of power (P0) configured by a base station (p0-PUCCH-Id) / an identifier of pathloss reference RS of a PUCCH (pucch-PathlossReferenceRS-Id) / a closed-loop index) for each TRP. That is, transmission power of a PUCCH may be determined based on a power control parameter set associated with a TO group in which the PUCCH is transmitted.

In addition, the PUCCH may be repeatedly transmitted in a plurality of TOs for different PUCCH resources. In this case, each PUCCH resource may be mapped/corresponded to different TRPs and mapped/corresponded to different TO groups. Transmission power of a PUCCH may be determined based on a power control parameter set configured for each PUCCH resource. That is, transmission power of a PUCCH may be determined based on a power control parameter set associated with a TO group (i.e., PUCCH resource) through which the PUCCH is transmitted.

For example, the PUCCH may be transmitted with transmission power configured by the configuration information. Specifically, a PUCCH for each TRP may be transmitted with transmission power based on any one of the plurality of power control parameter sets (e.g., a power control parameter set includes association information for an identifier of power (P0) configured by a base station (p0-PUCCH-Id) / an identifier of pathloss reference RS of a PUCCH (pucch-PathlossReferenceRS-Id) / a closed-loop index) in spatial relation information (PUCCH-SpatialRelationInfo). Here, among the plurality of power control parameters, a parameter applied to a PUCCH for each TRP may be determined based on a separate indication (e.g., the DCI) from a base station or configuration (e.g., the configuration information).

For example, the PUCCH may be transmitted when an M-TRP PUCCH is enabled/activated by the configuration information.

For example, the PUCCH may be transmitted through different PUCCH resource(s) in which spatial relationship information (PUCCH-SpatialRelationInfo) of the PUCCH is not configured/activated. The different PUCCH resource(s) may be based on PUCCH resource(s) explicitly or implicitly indicated through the configuration information.

For example, the PUCCH may be transmitted through different PUCCH resource(s) in which spatial relationship information (PUCCH-SpatialRelationInfo) is configured/activated. Here, the PUCCH may be transmitted based on beams (i.e., reference RSs) related to the different PUCCH resources. The beams (i.e., reference RSs) related to the different PUCCH resources may be determined based on transmission beam information of spatial relationship information (PUCCH-SpatialRelationInfo) configured/activated for each PUCCH resource. The PUCCH may be transmitted with transmission power based on power control information of spatial relationship information (PUCCH-SpatialRelationInfo) configured/activated for each PUCCH resource.

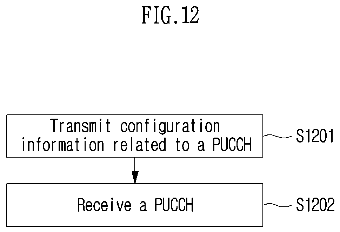

FIG. 12 illustrates an operation of a base station for transmitting and receiving a PUCCH according to an embodiment of the present disclosure.

FIG. 12 illustrates an operation of a terminal based on the previously proposed method (e.g., at least one of options 1, 2, and 3 according to proposal (embodiment) 1-1, and options 1, 2, 3, 4, 5, and 6 according to proposal (embodiment) 1-2). The example of FIG. 12 is for convenience of description and does not limit the scope of the present disclosure. Some step(s) illustrated in FIG. 12 may be omitted depending on circumstances and/or configurations. In addition, the terminal in FIG. 11 is only one example, and may be implemented as a device illustrated in FIG. 13 below. For example, the processor (102/202) of FIG. 13 may control to transmit or receive channels/signals/data/information, etc. using the transceiver (106/206), and may control to store transmitted/received channels/signals/data/information, etc. in the memory (104/204).

Additionally, the operation of FIG. 12 may be processed by one or more processors (102, 202) of FIG. 13. In addition, the operation of FIG. 12 may be stored in a memory (e.g., one or more memories (104, 204) of FIG. 13) in the form of a command/program (e.g., instructions, executable code) for driving at least one processor (e.g., 102, 202) of FIG. 13.

Referring to FIG. 12, for convenience of explanation, the operation of a terminal for one base station (i.e., one TRP) is considered, but the operation of a terminal can be extended and applied to an operation between multiple TRPs as well.

The operations of FIG. 12 are preferably applied when a PUCCH is transmitted in the lowest frequency range (e.g., FR1) among one or more frequency ranges defined in a wireless communication system, but the present disclosure is not limited thereto.

Referring to FIG. 12, a base station transmits configuration information related to a PUCCH to a terminal (S1201).

The configuration information may be configuration information related to transmission of a PUCCH (e.g., M-TRP transmission of A/N PUCCH, CSI reporting PUCCH, SR PUCCH, SPS A/N PUCCH, BFR PUCCH) described in the above-described proposed method (e.g., at least one of options 1, 2, and 3 according to proposal (embodiment) 1-1, and options 1, 2, 3, 4, 5, and 6 according to proposal (embodiment) 1-2).

Specifically, the configuration information may be based on configuration information (e.g., higher layer IE for PUCCH configuration (PUCCH-config IE)/higher layer IE for PUCCH power control (pucch-PowerControl IE)) according to options 1 to 3 (particularly option 1) of the proposal (embodiment) 1-1 and/or options 1 to 6 (particularly option 1, 2 and 4) of the proposal (embodiment) 1-2.

Here, the configuration information may include information related to repeated PUCCH transmission (e.g., information on whether or not a PUCCH is repeatedly transmitted and/or information on the number of repetitions of PUCCH, etc.) at a plurality of transmission occasions (TO). In addition, information related to PUCCH transmission for M-TRP (i.e., information for specifying a TRP, mapping information between a plurality of transmission occasions (TOs) at which PUCCH is repeatedly transmitted and TO groups corresponding to/associated with each TRP, etc.) may be included. Here, each TO group may include one or more TOs. Mapping information between a plurality of transmission occasions (TOs) and TO groups corresponding to/associated with each TRP may explicitly specify one or more TOs mapped to a TO group corresponding/associated with each TRP. Alternatively, mapping information between a plurality of transmission occasions (TOs) and TO groups corresponding to/associated with each TRP includes only specific pattern information, and a plurality of transmission occasions (TOs) and a TO group corresponding to/associated with each TRP may be implicitly mapped according to corresponding pattern information. For example, a plurality of TOs in which PUCCH is repeatedly transmitted may be cyclically mapped to each TO group in units of two TOs (Here, 'two TO units' is for convenience of description, and the present disclosure is not limited thereto. Therefore, the two TO units can be interpreted as the number of a plurality of TOs (i.e., repetition number) divided by N units (here, N is the number of TO groups, N is a natural number).). Alternatively, a plurality of TOs on which PUCCHs are repeatedly transmitted may be cyclically mapped to N TO groups in units of one TO.

More specifically, for example, the configuration information may include, according to option 1 of the proposal (embodiment) 1-1, at least one of i) a specific CORESET (group) ID (e.g. CORESET ID, CORESET pool index) and search space set (SS set) ID, ii) a plurality of power control parameters for M-TRP PUCCH transmission based on a single PUCCH resource (e.g., an identifier of power (P0) configured by a base station (p0-PUCCH-Id) / an identifier of pathloss reference RS of a PUCCH (pucch-PathlossReferenceRS-Id) / a closed-loop index), iii) association information between each PUCCH resource and a plurality of power control parameters (e.g., an identifier of power (P0) configured by a base station (p0-PUCCH-Id) / an identifier of pathloss reference RS of a PUCCH (pucch-PathlossReferenceRS-Id) / a closed-loop index), or vi) information (e.g., indication/configuration indicating on/off (enable/disable) of an M-TRP PUCCH or a condition related thereto) related to enabling (i.e., activation of repeated transmission of a PUCCH in a plurality of TOs grouped into N TO groups) of an M-TRP PUCCH.

As described above, association information (including association information) between each PUCCH resource and a plurality of power control parameter sets (e.g., an identifier of power (P0) configured by a base station (p0-PUCCH-Id) / an identifier of pathloss reference RS of a PUCCH (pucch-PathlossReferenceRS-Id) / a closed-loop index) may be associated with a plurality of TO groups. That is, in the case of M-TRP transmission for N TRPs based on a single PUCCH resource, the configuration information may include information on N power control parameter sets for the single PUCCH resource. Each of power control parameter sets may be independently configured (i.e., some power control parameters in different power parameter sets may have the same value), or entire power control parameters may be divided into N groups and configured (i.e., the same power control parameter values are not configured for different power parameter sets).

Here, even if an explicit association relationship is not configured by the configuration information, the N TO groups (i.e., corresponding to N TRPs) and the N power control parameter sets may be mapped one-to-one in the form of ordered pairs based on the same index. Alternatively, association relationship between the N TO groups (i.e., corresponding to the N TRPs) and the N power control parameter sets may be explicitly configuration by the configuration information.

For example, the configuration information may include information related to a PUCCH resource for M-TRP PUCCH transmission according to option 1 of the proposal (embodiment) 1-1. Here, the PUCCH resource for the M-TRP PUCCH transmission may be a single PUCCH resource in which spatial relationship information (PUCCH-SpatialRelationInfo) is not configured/activated. In addition, the PUCCH resource for the M-TRP PUCCH transmission may be based on different PUCCH resource(s) for which PUCCH spatial relationship information (PUCCH-SpatialRelationInfo) is not configured/activated. In this case, the configuration information may include information (i.e., pairing/grouping information) related to the different PUCCH resource(s). The information related to the different PUCCH resource(s) may include i) information explicitly indicating (for specifying) the PUCCH resource (e.g., specific codepoint(s) among codepoints of a PRI field) and/or ii) information implicitly indicating (for specifying) the PUCCH resource (e.g., i-th PUCCH resource in each PUCCH resource group/ PUCCH resource grouping information according to a specific criterion) .

Alternatively, spatial relationship information (PUCCH-SpatialRelationInfo) may be configured for each of the different PUCCH resource(s) for the M-TRP PUCCH transmission, and power of a PUSCH transmitted in a TO group (i.e., TRP) corresponding to each PUCCH resource may be determined by a power control parameter set (e.g., a power control parameter set includes association information for an identifier of power (P0) configured by a base station (p0-PUCCH-Id) / an identifier of pathloss reference RS of a PUCCH (pucch-PathlossReferenceRS-Id) / a closed-loop index) in spatial relation information (PUCCH-SpatialRelationInfo) for the corresponding PUCCH resource.

In addition, for example, the configuration information may include PUCCH repetition information for each PUCCH format according to option 1 of the proposal (embodiment) 1-2. In addition, for example, the configuration information may include PUCCH repetition information for each PUCCH resource according to option 2 of the proposal (embodiment) 1-2. In addition, for example, the configuration information may include CORESET/SS set information related to PUCCH repetition according to option 4 of the proposal (embodiment) 1-2.

In addition, the configuration information may include PUCCH repetition information (i.e., information on whether PUCCH repetition are transmitted or not and/or information on the number of PUCCH repetitions) and/or information related to M-TRP transmission (information indicating S-TRP/M-TRP switching, or M-TRP activation indication). In other words, the configuration information may include information for activating repeated transmission of the PUCCH (i.e., M-TRP transmission of PUCCH) in the plurality of TOs based on the N TO groups. In addition, the corresponding information may be transmitted through MAC CE or updated/activated.

A base station received a PUCCH from a terminal (S1202).

Here, the PUCCH may be transmitted according to the above-described proposed method (e.g., at least one of options 1, 2, and 3 according to proposal (embodiment) 1-1, and options 1, 2, 3, 4, 5, and 6 according to proposal (embodiment) 1-2).

The PUCCH may be repeatedly transmitted at a plurality of transmission occasions (TO) for the one PUCCH resource. In addition, the plurality of TOs may be mapped/grouped into N (N is a natural number) TO groups (i.e., N TRPs). Each TO group (i.e., each TRP) may include one or more TOs. As a result, a PUCCH is repeatedly transmitted to each TRP in a plurality of TOs, and a TO group to which a PUCCH is transmitted can be grouped/configured for each TRP.

Therefore, a terminal repeatedly transmits a PUCCH in all of the plurality of TOs, but a base station receives the PUCCH from the terminal only in TOs corresponding to the base station (i.e., TOs belonging to a TO group corresponding to the base station).

In addition, N power control parameter sets may be configured for a corresponding PUCCH resource, and the N TO groups (i.e., N TRPs) may be associated with N power control parameter sets in configuration information related to the PUCCH. Transmission power of a PUCCH may be determined based on association information between different (independent) power control parameter sets (e.g., an identifier of power (P0) configured by a base station (p0-PUCCH-Id) / an identifier of pathloss reference RS of a PUCCH (pucch-PathlossReferenceRS-Id) / a closed-loop index) for each TRP. That is, transmission power of a PUCCH may be determined based on a power control parameter set associated with a TO group in which the PUCCH is transmitted. In other words, transmission power of a PUCCH may be determined based on a power control parameter set associated with a TO group corresponding to a base station. Therefore, a base station can know that transmission power of a PUCCH transmitted from a terminal is determined based on a PUCCH power control parameter set associated with TOs corresponding to a base station (i.e., TOs belonging to a TO group corresponding to the base station).

In addition, the PUCCH may be repeatedly transmitted in a plurality of TOs for different PUCCH resources. In this case, each PUCCH resource may be mapped/corresponded to different TRPs and mapped/corresponded to different TO groups. Transmission power of a PUCCH may be determined based on a power control parameter set configured for each PUCCH resource. That is, transmission power of a PUCCH may be determined based on a power control parameter set associated with a TO group (i.e., PUCCH resource) through which the PUCCH is transmitted.

For example, the PUCCH may be transmitted with transmission power configured by the configuration information. Specifically, a PUCCH for each TRP may be transmitted with transmission power based on any one of the plurality of power control parameter sets (e.g., a power control parameter set includes association information for an identifier of power (P0) configured by a base station (p0-PUCCH-Id) / an identifier of pathloss reference RS of a PUCCH (pucch-PathlossReferenceRS-Id) / a closed-loop index) in spatial relation information (PUCCH-SpatialRelationInfo). Here, among the plurality of power control parameters, a parameter applied to a PUCCH for each TRP may be determined based on a separate indication (e.g., the DCI) from a base station or configuration (e.g., the configuration information).

For example, the PUCCH may be transmitted when an M-TRP PUCCH is enabled/activated by the configuration information.

For example, the PUCCH may be transmitted through different PUCCH resource(s) in which spatial relationship information (PUCCH-SpatialRelationInfo) of the PUCCH is not configured/activated. The different PUCCH resource(s) may be based on PUCCH resource(s) explicitly or implicitly indicated through the configuration information.

For example, the PUCCH may be transmitted through different PUCCH resource(s) in which spatial relationship information (PUCCH-SpatialRelationInfo) is configured/activated. Here, the PUCCH may be transmitted based on beams (i.e., reference RSs) related to the different PUCCH resources. The beams (i.e., reference RSs) related to the different PUCCH resources may be determined based on transmission beam information of spatial relationship information (PUCCH-SpatialRelationInfo) configured/activated for each PUCCH resource. The PUCCH may be transmitted with transmission power based on power control information of spatial relationship information (PUCCH-SpatialRelationInfo) configured/activated for each PUCCH resource.

General Device to which the Present Disclosure may be applied

FIG. 13 is a diagram which illustrates a block diagram of a wireless communication device according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs (Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless

## EP 4 195 846 B1

signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. The present invention is defined by the appended independent claims.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.  A method comprising:

    receiving, by a terminal (200), from a base station (100), configuration information related to a physical uplink control channel, PUCCH, transmission (S1101), wherein the configuration information includes information on two power control, PC, parameter sets; and
    transmitting, by a terminal (200), to the base station (100), the PUCCH transmission in one PUCCH resource based on the configuration information (S1102),
    wherein based on four PUCCH repetitions for the one PUCCH resource being used for repetition of the PUCCH transmission, i) a first PC parameter set and a second PC parameter set of the two PC parameter sets are alternately applied to the four PUCCH repetitions, or ii) the first PC parameter set is applied to preceding two PUCCH repetitions and the second PC parameter set is applied to the following two PUCCH repetitions of the four PUCCH repetitions transmission power of the PUCCH transmission, and
    wherein whether i) the first PC parameter set and the second PC parameter set of the two PC parameter sets are alternately applied to the four PUCCH repetitions, or ii) the first PC parameter set is applied to preceding two PUCCH repetitions and the second PC parameter set is applied to the following two PUCCH repetitions of the four PUCCH repetitions is determined based on the configuration information.

2.  The method of claim 1, wherein each PC parameter set includes at least one of an identifier, ID, of power, p0, configured by the base station for the PUCCH, a pathloss reference signal, RS, identifier, ID, and/or closed-loop index.

3.  The method of claim 1, wherein the PUCCH transmission is transmitted in a lowest frequency range among one or more frequency ranges defined in the wireless communication system.

4.  The method of claim 1, further comprising:

    receiving, by a terminal (200), from the base station (100), downlink control information, DCI, for scheduling a physical downlink shared channel, PDSCH, on a physical downlink control channel, PDCCH; and
    receiving, by a terminal (200), from the base station (100), the PDSCH based on the DCI,
    wherein the one PUCCH resource is specified by a PUCCH resource indicator, PRI, field in the DCI.

5.  The method of claim 4, wherein based on the DCI being received in a specific control resource set, CORESET, and/or a specific search space, SS, set, the repetition of the PUCCH transmission is configured.

6.  The method of claim 1, wherein two spatial relation information for the one PUCCH resource is configured in the configuration information,
    wherein the two power control parameter sets are configured by the two spatial relation information.

7.  The method of claim 1, wherein the configuration information includes information on the number of repetitions of the PUCCH transmission for each PUCCH format or for each PUCCH resource.

8.  The method of claim 4, wherein based on repetition of PDSCH transmission or PDCCH transmission being configured, the repetition of the PUCCH transmission is configured.

9.  The method of claim 4, wherein in a time domain resource allocation, TDRA, field or a PRI field in the DCI, information on information on whether the PUCCH transmission is repeated and/or information on the number of repetitions of the PUCCH transmission are joint encoded.

10. A terminal (200) comprising:

    at least one transceiver (206) for transmitting and receiving a wireless signal; and
    at least one processor (202) for controlling the at least one transceiver,
    wherein the at least one processor (202) configured to:

    receive, from a base station (100), configuration information related to a physical uplink control channel, PUCCH, transmission (S1101), wherein the configuration information includes information on two power control, PC, parameter sets; and

transmit, to the base station (100), the PUCCH transmission in one PUCCH resource based on the configuration information (S1102),

wherein based on a plurality of PUCCH repetitions for the one PUCCH resource being used for repetition of the PUCCH transmission, i) a first PC parameter set and a second PC parameter set of the two PC parameter sets are alternately applied to the four PUCCH repetitions, or ii) the first PC parameter set is applied to preceding two PUCCH repetitions and the second PC parameter set is applied to the following two PUCCH repetitions of the four PUCCH repetitions to determine transmission power of the PUCCH transmission, and

wherein whether i) the first PC parameter set and the second PC parameter set of the two PC parameter sets are alternately applied to the four PUCCH repetitions, or ii) the first PC parameter set is applied to preceding two PUCCH repetitions and the second PC parameter set is applied to the following two PUCCH repetitions of the four PUCCH repetitions is determined based on the configuration information.

11. A base station (100) comprising:

at least one transceiver (106) for transmitting and receiving a wireless signal; and
at least one processor (102) for controlling the at least one transceiver,
wherein the at least one processor (102) configured to:

transmit, to a terminal (200), configuration information related to a physical uplink control channel, PUCCH, transmission (S1201), wherein the configuration information includes information on two power control, PC, parameter sets; and
receive, from the terminal (200), the PUCCH transmission in one PUCCH resource based on the configuration information (S1202),

wherein based on a plurality of PUCCH repetitions for the one PUCCH resource being used for repetition of the PUCCH transmission, i) a first PC parameter set and a second PC parameter set of the two PC parameter sets are alternately applied to the four PUCCH repetitions, or ii) the first PC parameter set is applied to preceding two PUCCH repetitions and the second PC parameter set is applied to the following two PUCCH repetitions of the four PUCCH repetitions to determine transmission power of the PUCCH transmission, and

wherein whether i) the first PC parameter set and the second PC parameter set of the two PC parameter sets are alternately applied to the four PUCCH repetitions, or ii) the first PC parameter set is applied to preceding two PUCCH repetitions and the second PC parameter set is applied to the following two PUCCH repetitions of the four PUCCH repetitions is determined based on the configuration information.

**Patentansprüche**

1. Ein Verfahren, das umfasst:

Empfangen, durch ein Endgerät (200), von einer Basisstation (100), von Konfigurationsinformationen, die sich auf eine physikalische Uplink-Steuerkanal-, PUCCH, -Übertragung (S1101) beziehen, wobei die Konfigurationsinformationen Informationen über zwei Leistungssteuerungs-, PC-, Parametersätze enthalten; und
Übertragen der PUCCH-Übertragung in einer PUCCH-Ressource auf der Grundlage der Konfigurationsinformationen (S1102) durch ein Endgerät (200) an die Basisstation (100),
wobei basierend auf vier PUCCH-Wiederholungen für die eine PUCCH-Ressource, die für die Wiederholung der PUCCH-Übertragung verwendet wird, i) ein erster PC-Parametersatz und ein zweiter PC-Parametersatz der zwei PC-Parametersätze abwechselnd auf die vier PUCCH-Wiederholungen angewendet werden, oder ii) der erste PC-Parametersatz auf die vorhergehenden zwei PUCCH-Wiederholungen angewendet wird und der zweite PC-Parametersatz auf die folgenden zwei PUCCH-Wiederholungen der vier PUCCH-Wiederholungen angewendet wird, um die Sendeleistung der PUCCH-Übertragung zu bestimmen, und
wobei basierend auf der Konfigurationsinformation bestimmt wird, ob i) der erste PC-Parametersatz und der zweite PC-Parametersatz der zwei PC-Parametersätze abwechselnd auf die vier PUCCH-Wiederholungen angewendet werden, oder ii) der erste PC-Parametersatz auf die vorhergehenden zwei PUCCH-Wiederholungen angewendet wird und der zweite PC-Parametersatz auf die folgenden zwei PUCCH-Wiederholungen der vier PUCCH-Wiederholungen angewendet wird.

2. Verfahren nach Anspruch 1, wobei jeder PC-Parametersatz mindestens eines enthält von einer Kennung, ID, einer Leistung, p0, die von der Basisstation für den PUCCH konfiguriert wurde, einer Pfadverlust-Referenzsignal, RS, -Kennung, ID, und/oder einem Closed-Loop-Index.

**3.** Verfahren nach Anspruch 1, wobei die PUCCH-Übertragung in einem niedrigsten Frequenzbereich unter einem oder mehreren in dem drahtlosen Kommunikationssystem definierten Frequenzbereichen übertragen wird.

**4.** Verfahren nach Anspruch 1, ferner umfassend:

Empfangen, durch ein Endgerät (200), von der Basisstation (100), von Downlink-Steuerinformationen, DCI, zum Planen eines physikalischen gemeinsam genutzten Downlink-Kanals, PDSCH, auf einem physikalischen Downlink-Steuerkanal, PDCCH; und
Empfangen des PDSCH auf der Grundlage der DCI durch ein Endgerät (200) von der Basisstation (100),
wobei die eine PUCCH-Ressource durch ein PUCCH-Ressourcenindikator, PRI - Feld in der DCI spezifiziert wird.

**5.** Verfahren nach Anspruch 4, wobei basierend auf der DCI, die in einem spezifischen Steuerressourcensatz, CORESET, und/oder einem spezifischen Suchraum, SS, -satz empfangen wird, die Wiederholung der PUCCH-Übertragung konfiguriert wird.

**6.** Verfahren nach Anspruch 1, wobei zwei räumliche Beziehungsinformationen für die eine PUCCH-Ressource in den Konfigurationsinformationen konfiguriert sind,
wobei die zwei Leistungssteuerungsparametersätze durch die zwei räumlichen Beziehungsinformationen konfiguriert werden.

**7.** Verfahren nach Anspruch 1, wobei die Konfigurationsinformationen Informationen über die Anzahl von Wiederholungen der PUCCH-Übertragung für jedes PUCCH-Format oder für jede PUCCH-Ressource enthalten.

**8.** Verfahren nach Anspruch 4, wobei basierend auf der Wiederholung der PDSCH-Übertragung oder PDCCH-Übertragung die Wiederholung der PUCCH-Übertragung konfiguriert wird.

**9.** Verfahren nach Anspruch 4, wobei in einem Time Domain Resource Allocation, TDRA, -Feld oder einem PRI-Feld in der DCI Informationen darüber, ob die PUCCH-Übertragung wiederholt wird, und/oder Informationen über die Anzahl der Wiederholungen der PUCCH-Übertragung gemeinsam kodiert werden.

**10.** Ein Endgerät (200) umfassend:

mindestens einen Transceiver (206) zum Senden und Empfangen eines drahtlosen Signals; und
mindestens einen Prozessor (202) zum Steuern des mindestens einen Transceivers,
wobei der mindestens eine Prozessor (202) konfiguriert ist, zum:

Empfangen, von einer Basisstation (100), von Konfigurationsinformationen, die sich auf eine physikalische Uplink-Steuerkanal-, PUCCH-, Übertragung (S1101) beziehen, wobei die Konfigurationsinformationen Informationen über zwei Leistungssteuerungs-, PC-, Parametersätze enthalten; und
Übertragen der PUCCH-Übertragung in einer PUCCH-Ressource basierend auf den Konfigurationsinformationen (S1102) an die Basisstation (100),
wobei basierend auf einer Vielzahl von PUCCH-Wiederholungen für die eine PUCCH-Ressource, die für die Wiederholung der PUCCH-Übertragung verwendet wird, i) ein erster PC-Parametersatz und ein zweiter PC-Parametersatz der zwei PC-Parametersätze abwechselnd auf die vier PUCCH-Wiederholungen angewendet werden, oder ii) der erste PC-Parametersatz auf die vorhergehenden zwei PUCCH-Wiederholungen angewendet wird und der zweite PC-Parametersatz auf die folgenden zwei PUCCH-Wiederholungen der vier PUCCH-Wiederholungen angewendet wird, um die Sendeleistung der PUCCH-Übertragung zu bestimmen, und
wobei basierend auf der Konfigurationsinformation bestimmt wird, ob i) der erste PC-Parametersatz und der zweite PC-Parametersatz der zwei PC-Parametersätze abwechselnd auf die vier PUCCH-Wiederholungen angewendet werden, oder ii) der erste PC-Parametersatz auf die vorhergehenden zwei PUCCH-Wiederholungen angewendet wird und der zweite PC-Parametersatz auf die folgenden zwei PUCCH-Wiederholungen der vier PUCCH-Wiederholungen angewendet wird.

**11.** Eine Basisstation (100), umfassend:

mindestens einen Transceiver (106) zum Senden und Empfangen eines drahtlosen Signals; und

mindestens einen Prozessor (102) zum Steuern des mindestens einen Transceivers, wobei der mindestens eine Prozessor (102) konfiguriert ist, zum:

Übertragen von Konfigurationsinformationen, die sich auf eine physikalische Uplink-Steuerkanal-, PUCCH-, Übertragung (S1201) beziehen, an ein Endgerät (200), wobei die Konfigurationsinformationen Informationen über zwei Leistungssteuerungs-, PC-, Parametersätze enthalten; und

Empfangen der PUCCH-Übertragung von dem Endgerät (200) in einer PUCCH-Ressource basierend auf den Konfigurationsinformationen (S1202),

wobei basierend auf einer Vielzahl von PUCCH-Wiederholungen für die eine PUCCH-Ressource, die für die Wiederholung der PUCCH-Übertragung verwendet wird, i) ein erster PC-Parametersatz und ein zweiter PC-Parametersatz der zwei PC-Parametersätze abwechselnd auf die vier PUCCH-Wiederholungen angewendet werden, oder ii) der erste PC-Parametersatz auf die vorhergehenden zwei PUCCH-Wiederholungen angewendet wird und der zweite PC-Parametersatz auf die folgenden zwei PUCCH-Wiederholungen der vier PUCCH-Wiederholungen angewendet wird, um die Sendeleistung der PUCCH-Übertragung zu bestimmen, und wobei basierend auf den Konfigurationsinformationen bestimmt wird, ob i) der erste PC-Parametersatz und der zweite PC-Parametersatz der zwei PC-Parametersätze abwechselnd auf die vier PUCCH-Wiederholungen angewendet werden oder ii) der erste PC-Parametersatz auf die vorhergehenden zwei PUCCH-Wiederholungen angewendet wird und der zweite PC-Parametersatz auf die folgenden zwei PUCCH-Wiederholungen der vier PUCCH-Wiederholungen angewendet wird.

## Revendications

1. Procédé, comprenant:

la réception, par un terminal (200), en provenance d'une station de base (100), d'informations de configuration relatives à une transmission (S1101) du canal physique de commande de liaison montante physique, PUCCH, les informations de configuration comprenant des informations sur deux ensembles de paramètres de commande de puissance, PC; et

la transmission, par un terminal (200), à la station de base (100), de la transmission PUCCH dans une ressource PUCCH sur la base des informations de configuration (S1102),

dans lequel, sur la base de quatre répétitions PUCCH pour la ressource PUCCH utilisée pour la répétition de la transmission PUCCH, i) un premier ensemble de paramètres PC et un second ensemble de paramètres PC des deux ensembles de paramètres PC sont appliqués alternativement aux quatre répétitions PUCCH, ou ii) le premier ensemble de paramètres PC est appliqué aux deux répétitions PUCCH précédentes et le second ensemble de paramètres PC est appliqué aux deux répétitions PUCCH suivantes des quatre répétitions PUCCH pour déterminer la puissance de transmission de la transmission PUCCH, et

dans lequel on détermine, sur la base des informations de configuration, si i) un premier ensemble de paramètres PC et un deuxième ensemble de paramètres PC des deux ensembles de paramètres PC sont appliqués alternativement aux quatre répétitions PUCCH, ou ii) le premier ensemble de paramètres PC est appliqué aux deux répétitions PUCCH précédentes et le deuxième ensemble de paramètres PC est appliqué aux deux répétitions PUCCH suivantes des quatre répétitions PUCCH.

2. Procédé selon la revendication 1, dans lequel chaque ensemble de paramètres PC comprend au moins l'un parmi un identifiant, ID, de puissance, p0, configuré par la station de base pour le PUCCH, un identifiant, ID, de signal de référence, RS, d'affaiblissement de propagation, un identifiant, ID, et/ou un indice de boucle fermée.

3. Procédé selon la revendication 1, dans lequel la transmission PUCCH est transmise dans une gamme de fréquences la plus basse parmi une ou plusieurs gammes de fréquences définies dans le système de communication sans fil.

4. Procédé selon la revendication 1, comprenant en outre:

la réception, par un terminal (200), en provenance de la station de base (100), d'informations de commande de liaison descendante, DCI, pour ordonnancer un canal physique de liaison descendante partagé, PDSCH, sur un canal physique de commande de liaison descendante, PDCCH; et

la réception, par un terminal (200), en provenance de la station de base (100), le PDSCH sur la base des DCI, dans lequel la ressource PUCCH est spécifiée par un champ indicateur de ressource PUCCH, PRI, dans les DCI.

**5.** Procédé selon la revendication 4, dans lequel la répétition de la transmission PUCCH est configurée en fonction des DCI reçues dans un ensemble de ressources de commande spécifique, CORESET, et/ou d'un ensemble d'espaces de recherche spécifique, SS,

**6.** Procédé selon la revendication 1, dans lequel deux informations de relation spatiale pour la ressource PUCCH sont configurées dans les informations de configuration,
dans lequel les deux ensembles de paramètres de commande de puissance sont configurés par les deux informations de relation spatiale.

**7.** Procédé selon la revendication 1, dans lequel les informations de configuration comprennent des informations sur le nombre de répétitions de transmission PUCCH pour chaque format PUCCH ou pour chaque ressource PUCCH.

**8.** Procédé selon la revendication 4, dans lequel la répétition de la transmission PUCCH est configurée en fonction de la répétition de transmission PDSCH ou de la configuration de la transmission PDCCH.

**9.** Procédé selon la revendication 4, dans lequel dans un champ d'allocation de ressources de domaine temporel, TDRA, ou dans un champ PRI dans les DCI, des informations sur la répétition de la transmission PUCCH et/ou des informations sur le nombre de répétitions de la transmission PUCCH sont codées conjointement.

**10.** Terminal (200) comprenant:

au moins un émetteur récepteur (206) destinée à transmettre et à recevoir un signal sans fil; et
au moins un processeur (202) destiné à commander l'au moins un émetteur récepteur,
dans lequel l'au moins un processeur (202) est configuré pour:

recevoir, en provenance d'une station de base (100), d'informations de configuration relatives à une transmission (S1101) du canal physique de commande de liaison montante physique, PUCCH, les informations de configuration comprenant des informations sur deux ensembles de paramètres de commande de puissance, PC; et
transmettre, à la station de base (100), la transmission PUCCH dans une ressource PUCCH sur la base des informations de configuration (S1102),
dans lequel, sur la base d'une pluralité de répétitions PUCCH pour la ressource PUCCH utilisée pour la répétition de la transmission PUCCH, i) un premier ensemble de paramètres PC et un second ensemble de paramètres PC des deux ensembles de paramètres PC sont appliqués alternativement aux quatre répétitions PUCCH, ou ii) le premier ensemble de paramètres PC est appliqué aux deux répétitions PUCCH précédentes et le second ensemble de paramètres PC est appliqué aux deux répétitions PUCCH suivantes des quatre répétitions PUCCH pour déterminer la puissance de transmission de la transmission PUCCH, et
dans lequel on détermine, sur la base des informations de configuration, si i) le premier ensemble de paramètres PC et un deuxième ensemble de paramètres PC des deux ensembles de paramètres PC sont appliqués alternativement aux quatre répétitions PUCCH, ou ii) le premier ensemble de paramètres PC est appliqué aux deux répétitions PUCCH précédentes et le deuxième ensemble de paramètres PC est appliqué aux deux répétitions PUCCH suivantes des quatre répétitions PUCCH.

**11.** Station de base (100) comprenant:

au moins un émetteur récepteur (106) destinée à transmettre et à recevoir un signal sans fil; et
au moins un processeur (102) destiné à commander l'au moins un émetteur récepteur,
dans lequel l'au moins un processeur (102) est configuré pour:

transmettre, à un terminal (200), les informations de configuration relatives à une transmission (S1201) du canal physique de commande de liaison montante physique, PUCCH, les informations de configuration comprenant des informations sur deux ensembles de paramètres de commande de puissance, PC; et
recevoir, en provenance du terminal (200), la transmission PUCCH dans une ressource PUCCH sur la base des informations de configuration (S1202),
dans lequel, sur la base d'une pluralité de répétitions PUCCH pour la ressource PUCCH utilisée pour la répétition de la transmission PUCCH, i) un premier ensemble de paramètres PC et un second ensemble de paramètres PC des deux ensembles de paramètres PC sont appliqués alternativement aux quatre répétitions PUCCH, ou ii) le premier ensemble de paramètres PC est appliqué aux deux répétitions PUCCH précédentes et le second ensemble de paramètres PC est appliqué aux deux répétitions PUCCH suivantes des quatre répétitions PUCCH pour déterminer la puissance de transmission de la transmission PUCCH, et

dans lequel on détermine, sur la base des informations de configuration, si i) le premier ensemble de paramètres PC et un deuxième ensemble de paramètres PC des deux ensembles de paramètres PC sont appliqués alternativement aux quatre répétitions PUCCH, ou ii) le premier ensemble de paramètres PC est appliqué aux deux répétitions PUCCH précédentes et le deuxième ensemble de paramètres PC est appliqué aux deux répétitions PUCCH suivantes des quatre répétitions PUCCH.

# EP 4 195 846 B1

FIG.1

EP 4 195 846 B1

FIG.1

52

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Size depends
on subcarrier
spacing

Symbol

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k,\bar{l})$
- In a resource block, $(k,l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

## FIG.4

# FIG.5

Resource grid

A carrier
(up to 3300 subcarriers, i.e., 275 RBs)

A BWP

1 RB=12 subcarrier

1 RE

1 subcarrier

1 Symbol

k=0

l=0 ......

FIG.6

INITIAL CELL SEARCH

PSS/SSS& [DLRS]& PBCH

S601

SYSTEM INFORMATION RECEPTION

PDCCH/ PDSCH (BCCH)

S602

RANDOM ACCESS PROCEDURE

PRACH

S603

PDCCH/ PDSCH

S604

PUSCH

S605

PDCCH/ PDSCH

S606

GENERAL DL/UL Tx/Rx

PDCCH/ PDSCH

S607

PUSCH/ PUCCH

S608

· DL/UL ACK/NACK
· UE CQI/PMI RI REPORT
   USING PUSCH AND PUCCH

# FIG.7

(a)

(b)

FIG.8

FIG.9

# FIG.10

Network

| TRP 2 | TRP 1 | | UE |

Configuration information — S1001

DCI — S1002

DCI — S1003

PDSCH — S1004

PDSCH — S1005

PUCCH — S1006

PUCCH — S1007

FIG.11

```
┌─────────────────────────────┐
│   Receive configuration     │
│ information related to a PUCCH│──── S1101
└─────────────────────────────┘
               │
               ▼
┌─────────────────────────────┐
│      Transmit a PUCCH        │──── S1102
└─────────────────────────────┘
```

FIG.12

```
┌────────────────────────────────┐
│      Transmit configuration     │
│  information related to a PUCCH  │───── S1201
└────────────────────────────────┘
                 │
                 ▼
┌────────────────────────────────┐
│         Receive a PUCCH          │───── S1202
└────────────────────────────────┘
```

FIG.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110536394 A

- CN 110536399 A

**Non-patent literature cited in the description**

- **LENOVO et al.** Remaining issues on multi-TRP/panel transmission. *R1-2003819*